# EUROPEAN PATENT APPLICATION

(11) **EP 4 794 254 A1**
(43) Date of publication of application: **19.08.2026**
(21) Application number: 26158171.4
(22) Date of filing: 12.02.2026
(51) Int. Cl.: H04L 9/00, H04L 9/30

(54) **SYSTEM FOR MULTI-INSTANCE SECURE COMMUNICATION USING QUANDLE-BASED CRYPTOGRAPHY IN SHARED NETWORKS**

(30) Priority: 12.02.2025 IL 31898525; 18.08.2025 US 202519302569
(71) Applicant: Mellanox Technologies, Ltd., 2069200 Yokneam (IL)
(72) Inventor: MENTOVICH, Elad, 2069200 Yokneam (IL); ZAHAVI, Eitan, 2069200 Yokneam (IL); HASSON RUSO, Ran, 2069200 Yokneam (IL); COHEN, Eliahu, 5290002 Ramat Gan (IL); CARMI, Avishy, 2069200 Yokneam (IL)
(74) Representative: Mathys & Squire

(57) **Abstract**

Systems, computer program products, and methods are described herein for multi-instance secure communication using quandle-based cryptography in shared networks. An example communication platform may receive, from a first entity, first primary information (fp) and first supplementary information (fs) for transmission to a second entity. The communication platform may encrypt the first primary information (fp) using a quandle-based encryption framework and a public encryption key (e). The encrypted first primary information (efp) and the first supplementary information (fs) may then be transmitted to the second entity. The communication platform may function within a shared network infrastructure, utilizing network resources shared with one or more other communication platforms to enable secure and isolated data exchange in multi-tenant environments.

## Description

### TECHNOLOGICAL FIELD

Example embodiments of the present disclosure relate to multi-instance secure communication using quandle-based cryptography in shared networks.

### BACKGROUND

Shared network infrastructure refers to a network configuration in which multiple entities, such as service providers or clients, utilize common physical and digital resources to facilitate data exchange and communication. This shared configuration is advantageous in environments such as telecommunications and datacenters, as it optimizes efficiency and cost-effectiveness by reducing redundant infrastructure. However, shared infrastructure can introduce security vulnerabilities, including risks of data breaches, identity theft, and other unauthorized data access. Addressing these vulnerabilities within a shared infrastructure is increasingly important, especially as telecommunications evolve to multi-tenant networks like 5G and 6G.

Applicant has identified a number of deficiencies and problems associated with multi-instance secure communication using quandle-based cryptography in shared networks. Many of these identified problems have been solved by developing solutions that are included in embodiments of the present disclosure, many examples of which are described in detail herein.

### GENERAL DESCRIPTION

The invention is defined by the claims. In order to illustrate the invention, aspects and embodiments which may or may not fall within the scope of the claims are described herein.

Systems, methods, and computer program products are therefore provided for multi-instance secure communication using quandle-based cryptography in shared networks.

In one aspect, a communication platform for secure quandle-based encryption in a shared network infrastructure is presented. The communication platform comprising: a processor; and a non-transitory storage device containing instructions that, when executed by the processor, cause the processor to: receive, from a first entity, first primary information (fp) and first supplementary information (fs) for transmission to a second entity; encrypt, using a quandle-based encryption framework, the first primary information (fp) using a public encryption key (e); and transmit the encrypted first primary information (efp) and first supplementary information (fs) to the second entity, wherein the communication platform uses network infrastructure shared with one or more other communication platforms.

In some embodiments, the first entity and the second entity are associated with the communication platform.

In some embodiments, the public encryption key (e) is associated with the communication platform.

In some embodiments, the instructions, when executed by the processor, further cause the processor to: generate the public encryption key (e).

In some embodiments, the instructions, when executed by the processor, further cause the processor to: receive the public encryption key (e) from an external source.

In some embodiments, the instructions, when executed by the processor, further cause the processor to: generate the encrypted first primary information (efp) based on the first primary information (fp), an encoding variable (y), and the public encryption key (e), wherein *efp = fp* ▷ *y,* wherein ▷ is a binary operation that satisfy axioms of a quandle.

In some embodiments, 0 ≤ *fp* ≤ *n* - 1, wherein *fp* is a composite number of the form, *n* = *p* · *q,* and wherein p and *q* are prime numbers.

In some embodiments, $fp ▷ y = y {\left(\frac{fp}{y}\right)}^{e}$*,* wherein 1 < *e* < *ϕ*(*n*), wherein *ϕ*(*n*) is Euler's totient function, and wherein *ϕ*(*n*) = *ϕ*(*p* · *q*) *=* (*p -* 1) · (*q -* 1).

In some embodiments, the shared network infrastructure is a telecommunication network, wherein the communication platform is a telecommunication network provider, and wherein the first entity and the second entity are communication devices.

In some embodiments, the first primary information (fp) comprises at least one of communication data, entity location information, or private entity identification information, and wherein the first supplementary information (fs) comprises at least one of public entity identification information, communication duration, or metadata associated with the communication data.

In some embodiments, the shared network infrastructure is a datacenter environment, wherein the communication platform is a datacenter provider, and wherein the first entity and the second entity are virtual machines (VMs).

In some embodiments, the first primary information (fp) comprises at least one of source code files, contents of a VM's memory snapshot, private identification information, or database records, and wherein the first supplementary information (fs) comprises at least one of a VM metadata, database schema, file metadata, or access control information.

In some embodiments, the instructions, when executed by the processor, further cause the processor to: establish a first initial communication link between the first entity and the second entity, and wherein transmitting the encrypted first primary information (efp) to the second entity comprises using the first initial communication link.

In some embodiments, the public encryption key (e) is a short key having a length that is less than or equal to 1024 bits.

In some embodiments, the instructions, when executed by the processor, further cause the processor to: transition from the first initial communication link to a first sustained communication link between the first entity and the second entity upon successful transmission of the encrypted first primary information (efp) and first supplementary information (fs) to the second entity, wherein transitioning further comprises transitioning the public encryption key (e) from the short key to a long key having a length that is greater than or equal to 2048 bits.

In another aspect, a method for secure quandle-based encryption in a shared network infrastructure is presented. The method comprising: receiving, at a communication platform, first primary information (fp) and first supplementary information (fs) from a first entity for transmission to a second entity; encrypting, by the communication platform, using a quandle-based encryption framework, the first primary information (fp) using a public encryption key (e); and transmitting, by the communication platform, the encrypted first primary information (efp) and first supplementary information (fs) to the second entity, wherein the communication platform uses network infrastructure shared with one or more other communication platforms.

In some embodiments, the first entity and the second entity are associated with the communication platform.

In some embodiments, the public encryption key (e) is associated with the communication platform.

In some embodiments, the public encryption key (e) is generated by the communication platform.

In some embodiments, the public encryption key (e) is received by the communication platform from an external source.

In some embodiments, the method further comprises: generating the encrypted first primary information (efp) based on the first primary information (fp), an encoding variable (y), and the public encryption key (e), *efp = fp* ▷ *y,* wherein ▷ is a binary operation that satisfy axioms of a quandle.

In some embodiments, 0 ≤ *fp* ≤ *n* - 1, wherein *fp* is a composite number of the form, *n* = *p* · *q,* and wherein p and *q* are prime numbers.

In some embodiments, $fp ▷ y = y {\left(\frac{fp}{y}\right)}^{e}$, wherein 1 < *e* < *ϕ*(*n*), wherein *ϕ*(*n*) is Euler's totient function, and wherein *ϕ*(*n*) = *ϕ*(*p* · *q*) *=* (*p -* 1) · (*q -* 1).

In some embodiments, the shared network infrastructure is a telecommunication network, wherein the communication platform is a telecommunication network provider, and wherein the first entity and the second entity are communication devices.

In some embodiments, the shared network infrastructure is a datacenter environment, wherein the communication platform is a datacenter provider, and wherein the first entity and the second entity are virtual machines (VMs).

Systems, computer program products, and methods are described herein for multi-instance secure communication using quandle-based cryptography in shared networks. An example communication platform may receive, from a first entity, first primary information (fp) and first supplementary information (fs) for transmission to a second entity. The communication platform may encrypt the first primary information (fp) using a quandle-based encryption framework and a public encryption key (e). The encrypted first primary information (efp) and the first supplementary information (fs) may then be transmitted to the second entity. The communication platform may function within a shared network infrastructure, utilizing network resources shared with one or more other communication platforms to enable secure and isolated data exchange in multi-tenant environments.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF THE DRAWINGS

Having described certain example embodiments of the present disclosure in general terms above, reference will now be made to the accompanying drawings. The components illustrated in the figures may or may not be present in certain embodiments described herein. Some embodiments may include fewer (or more) components than those shown in the figures.
FIG. 1 illustrates a schematic diagram of an example shared network infrastructure environment utilizing quandle-based cryptography, in accordance with an embodiment of the disclosure;
FIG. 2 illustrates a schematic block diagram of example circuitry, some or all of which may be included in the communication platform of FIG. 1, in accordance with an embodiment of the invention;
FIG. 3 illustrates a schematic diagram of an example server system architecture, some or all of which may be included in the server system, in accordance with an embodiment of the disclosure;
FIG. 4 illustrates a schematic diagram of an example datacenter network architecture, in accordance with an embodiment of the disclosure;
FIG. 5 illustrates a schematic diagram of an example server system architecture 500, some or all of which may be included in the server system of FIG. 4, in accordance with an embodiment of the disclosure;
FIG. 6 illustrates a schematic diagram of an example HPC cluster within a server system, in accordance with embodiments described herein;
FIG. 7 illustrates an example method for secure quandle-based encryption in a shared network infrastructure, in accordance with an embodiment of the disclosure; and
FIG. 8 illustrates an example method for continued secure communication between entities, in accordance with an embodiment of the disclosure.

### DETAILED DESCRIPTION

### Overview

Embodiments of the invention embrace quandle-based cryptography to achieve secure communication over shared network infrastructures. An example system may leverage quandle-based cryptography to address the security challenges of shared network infrastructure by generating unique encryption keys for each communication instance or data session. For instance, the example system may generate a unique encryption key based on quandle-based cryptography principles to encrypt each communication instance. Alternatively, the example system may generate a unique encryption key based on quandle-based cryptography principles to encrypt all communication instances managed by a particular managing entity. In this way, the agreed-upon public information (e.g., public IDs, call duration) can be shared, while sensitive private information (e.g., full ID, user location) may remain secure.

For example, in a telecommunication network, the example system may generate a distinct encryption key based on quandle-based cryptography principles to encrypt each call, ensuring that basic information like public IDs and call duration are accessible for necessary operations, while the sensitive private data such as user locations and full identities are encrypted and remain inaccessible to unauthorized parties. Alternatively, the example system could generate and assign a unique encryption key to each service provider, allowing them to use this key to encrypt all communication instances they handle. This distinction ensures flexibility in how encryption is managed: using a unique key for each call offers granular security at the level of individual communication instances, while using a unique key per service provider simplifies management while still securing all communications under that provider's control. In both cases, the example system may allow multiple service providers to share the same physical infrastructure without risking data exposure to one another. The example system may thus facilitate secure, isolated operations even in a shared environment, making it particularly valuable in complex, multi-tenant networks like 5G or 6G.

In another example, in a datacenter environment, the example system may generate a distinct encryption key for each virtual machine (VM) session based on quandle-based cryptography principles, such that each VM session is secured independently, allowing multiple clients to operate on the same physical infrastructure without risking exposure of sensitive data. Public information, such as VM identifiers or session durations, may be accessible for authorized parties as necessary, while private client data, including sensitive identifiers or session content, remains encrypted and protected from unauthorized access. Alternatively, the example system could assign a unique encryption key to each client, enabling the client to use this key to encrypt all VM sessions they initiate. This model offers the flexibility of either session-specific or client-specific encryption, depending on security requirements and operational preferences. By implementing quandle-based encryption, the system ensures data isolation and confidentiality, even in a high-density, multi-tenant datacenter environment.

Where possible, any terms expressed in the singular form herein are meant to also include the plural form and vice versa, unless explicitly stated otherwise. Also, as used herein, the term "a" and/or "an" shall mean "one or more," even though the phrase "one or more" is also used herein. Furthermore, when it is said herein that something is "based on" something else, it may be based on one or more other things as well. In other words, unless expressly indicated otherwise, as used herein "based on" means "based at least in part on" or "based at least partially on." Like numbers refer to like elements throughout.

As used herein, "operatively coupled" may mean that the components are electronically or optically coupled and/or are in electrical or optical communication with one another. Furthermore, "operatively coupled" may mean that the components may be formed integrally with each other or may be formed separately and coupled together. Furthermore, "operatively coupled" may mean that the components may be directly connected to each other or may be connected to each other with one or more components (e.g., connectors) located between the components that are operatively coupled together. Furthermore, "operatively coupled" may mean that the components are detachable from each other or that they are permanently coupled together.

As used herein, "determining" may encompass a variety of actions. For example, "determining" may include calculating, computing, processing, deriving, investigating, ascertaining, and/or the like. Furthermore, "determining" may also include receiving (e.g., receiving information), accessing (e.g., accessing data in a memory), and/or the like. Also, "determining" may include resolving, selecting, choosing, calculating, establishing, and/or the like. Determining may also include ascertaining that a parameter matches a predetermined criterion, including that a threshold has been met, passed, exceeded, satisfied, etc.

Furthermore, as would be evident to one of ordinary skill in the art in light of the present disclosure, the terms "substantially" and "approximately" indicate that the referenced element or associated description is accurate to within applicable engineering tolerances.

As used herein, "communication platform," may refer to a system, apparatus, or combination of hardware and software components configured to facilitate secure communication over a shared network infrastructure. The communication platform may include, but is not limited to, processors, memory devices, network interfaces, and/or the like. The communication platform may operate in diverse environments, including telecommunication networks, data centers, cloud infrastructure, satellite communication systems, hybrid or multi-tenant architectures, and/or the like. The communication platform may manage communication links between entities, encrypting sensitive information using a quandle-based cryptography framework, and transmitting data securely across the shared infrastructure. The communication platform may directly interact with entities such as devices, VMs, servers, or applications, providing secure communication services tailored to the requirements of the shared network infrastructure. The communication platform may dynamically generate, distribute, and manage cryptographic keys and encoding variables, such as public-private key pairs and session-specific parameters, to secure communication links. Additionally, the communication platform may handle tasks such as establishing initial communication links, transitioning to sustained secure links, routing data through intermediary platforms or nodes, and monitoring network resources to optimize performance and security.

As used herein, the "entity," may refer to any device, system, application, virtualized resource, or user that participates in data exchange facilitated by the communication platform over the shared network infrastructure. Entities may include, but are not limited to, physical devices such as smartphones, tablets, IoT devices, servers, or network appliances; virtualized resources such as VMs, containers, or cloud-hosted applications; or logical constructs such as user accounts, software processes, or network endpoints. An entity may act as a sender, recipient, or intermediary in a communication session, interacting with the communication platform to transmit or receive sensitive data. The communication platform may authenticate the entity, allocate resources for secure communication, and manage encryption keys or encoding variables associated with the entity. Entities may be associated with a single communication platform or distributed across multiple platforms within the shared network infrastructure, depending on the system architecture and administrative domain. In some embodiments, an entity may generate or consume primary information (e.g., sensitive data such as identification details, proprietary content, or operational records) and supplementary information (e.g., metadata or routing information) as part of a secure communication session. Entities may operate independently or in coordination with other entities, exchanging encrypted data while maintaining confidentiality and integrity through the cryptographic mechanisms managed by the communication platform. Additionally, entities may represent clients or tenants in multi-tenant environments, such as a data center or telecommunication network, where multiple entities share the same physical or virtual infrastructure. Depending on the specific implementation, entities may also be responsible for generating or storing cryptographic parameters, such as private keys or encoding variables, to support the secure exchange of information. As such, the term "entity" may include a wide range of components and roles, ensuring flexibility and applicability across different types of shared network infrastructures and communication scenarios. Whether operating as a device, application, or virtualized resource, an entity interacts with the communication platform to enable secure, efficient, and isolated data exchange in accordance with the embodiments of the disclosure.

As used herein, "shared network infrastructure" may refer to a network system configured to facilitate access by multiple users, devices, applications, organizations, and/or the like. The shared network infrastructure may include common hardware, software, and resources arranged to support communication, data transfer, and connectivity requirements. Such a system may be configured to enable efficient utilization of network resources, thereby reducing associated costs and permitting centralized management of the resources.

### Quandle-based Cryptographic Framework

Knot theory, a branch of topology, focuses on the study of knots and their properties, specifically how knots can be distinguished, categorized, and transformed into one another through continuous deformations without cutting or joining ends. This theoretical framework may be used to provide a concrete mathematical basis for developing cryptographic methods that are inherently resistant to known quantum computing threats. The application of knot theory to cryptography leverages the concept that knots and their transformations can represent data, encryption processes, and cryptographic keys. The invariants in knot theory (such as the Jones polynomial), which are properties that remain unchanged under knot deformation, offer a way to encode and secure information. These invariants can serve as the basis for cryptographic algorithms, where the complexity and difficulty of analyzing knot transformations provide security against unauthorized decryption. A tightly connected concept is that of a braid, which consists of a set of strands that may intertwine with each other vertically but do not intersect or overlap when viewed from above. Any knot can be represented as a closed braid, where the closure involves connecting the corresponding upper and lower ends of a braid without introducing new crossings. This operation transforms an open braid into a closed loop, or knot, preserving the topological features encoded in the braid structure.

The principle that two knots are equivalent if one can be transformed into the other through continuous deformation without cutting or stitching supports the security model of this cryptographic approach and can aid in traversing a noisy communication channel without losing the encoded information. In this context, the process of encryption can be conceptualized as the "knotting" of data, where the data is entangled in a complex knot structure. Decryption, conversely, involves "unknotting" the data, a process that requires knowledge of specific transformations, analogous to possessing the cryptographic key. The challenge of determining whether two knots are equivalent, particularly as knots increase in complexity, illustrates the difficulty of breaking the cryptographic scheme without the correct key. This highly complex task provides a significant barrier to both classical and quantum computational attacks.

The Reidmeister moves form the basis for determining when two knot diagrams represent the same knot, or in other words, when two knots are equivalent. The Type I move (twist and untwist) adds or removes a twist in the knot diagram. It involves creating or eliminating a single loop, effectively changing the local twisting of the strand. Despite its simplicity, the Type I move is powerful in demonstrating how a single twist does not change the essential properties of a knot. The Type II move (poke) involves two strands of the knot passing twice over or under each other. It can either introduce or remove a pair of crossings such that the strands remain unbroken and the overall topology of the knot is preserved. This move is particularly useful in illustrating how the interaction between different parts of the knot can be altered without affecting its fundamental characteristics. The Type III move (slide) involves sliding one strand over a crossing of two other strands. The Type III move does not change the number of crossings but alters the position of the strands around the crossings. The Type III move demonstrates the flexibility of knots in three-dimensional space, showing that the global structure of a knot can be preserved even as parts of it are rearranged. In the context of cryptography, the idea of knot equivalence through Reidemeister moves offers a metaphor for the encryption and decryption process. Just as a knot can be transformed through a series of moves without altering its essential characteristics, data can be encrypted into a complex form and later decrypted back to its original state, provided the correct sequence of transformations (analogous to the cryptographic key) is known.

Quandles are sets with binary operations satisfying axioms analogous to the Reidemeister moves used to manipulate knot diagrams. Embodiments of the invention contemplate an encryption framework employing the algebraic structure of quandles or racks to ensure secure, reversible encryption processes that allow for complex data manipulations while maintaining the integrity of the encrypted message. The axioms of quandles and racks facilitate the framework for encryption that mirrors operations on a message (plaintext) in the encrypted domain. Specifically, idempotency (quandle-specific) ensures that the encryption of a message using the same message as the encoding variable results in the message itself, a property that can be leveraged for consistency checks and to maintain structural patterns in encrypted data; invertibility allows for the reversible encryption process, ensuring that encrypted data (ciphertext) can be decrypted back to its original form (message) without loss of information, which is fundamental to any encryption scheme; self-distributivity enables complex manipulations of encrypted data that parallel operations on a message, allowing for certain computations to be performed directly on ciphertexts without revealing their contents. Self-distributivity allows for operations such as partially homomorphic encryption, where it is desirable to perform algebraic operations on encrypted data.

By exploiting quandle and rack axioms, the systems, methods, and computer program products described herein facilitate operations on ciphertexts similar to those performed on messages, without compromising confidentiality. Unlike conventional cryptographic algorithms that rely on associative operations (e.g., group operations), the non-associative nature of quandle operations adds a level of complexity to the cryptographic process. This way, the novel cryptographic framework proposed herein increases the level of security provided against conventional and sophisticated attacks, enabling secure data processing and transmission in digital environments. In the examples described herein, x ▷ y and c ◁ y are binary operations. Indeed, the two operations may be implemented in a number of ways, as long as these implementations satisfy the axioms of quandle and/or rack algebra. In one example embodiment, $x ▷ y = y {\left(\frac{x}{y}\right)}^{e}$ and $c ◁ y = y {\left(\frac{c}{y}\right)}^{f}$, where x may refer to the message to be transmitted, y may be an encoding variable (public or private, depending on the application), e may refer to public key, c may refer to the ciphertext, and f may refer to the private key. Unlike many other cryptographic frameworks, x, y, and c are rational numbers, rather than just integers. In the proposed encryption framework, the selection of variables, such as e and f, may draw parallels to the established methodologies employed in the Rivest-Shamir-Adleman (RSA) algorithm, particularly in the choice and mathematical properties of specific parameters. Specifically, e may be chosen such that 1 < e < ϕ(n) and e is coprime to ϕ(n), meaning that e and ϕ(n) share no common divisors other than 1. This ensures that e has a multiplicative inverse modulo ϕ(n). f may be calculated as the multiplicative inverse of e modulo ϕ(n). This means f is the number that satisfies the equation e · f = 1 mod ϕ(n). In other words, f is chosen such that the product off and e, divided by ϕ(n), leaves a remainder of 1. Here, n is the product of two (often large) prime numbers p and q, and ϕ(n) is Euler's totient function defined as ϕ(n) = ϕ(p · q) *=* (p - 1) · (q - 1). Similar to the RSA algorithm, the Carmichael's totient function may be used instead of Euler's totient function for same or similar purposes.

Furthermore, x ▷ y and c ◁ y may be complementary (in accordance with the above invertibility property), ensuring a symmetrical relationship that supports their cryptographic utility. Specifically, while x ▷ y is used to encrypt the message (x), i.e., to generate the ciphertext (c), while c ◁ y is used in decryption to retrieve the message (x) from the ciphertext (c). In conventional cryptographic algorithms, such as RSA, the message (x), is an integer. However, the proposed relationship between x ▷ y and c ◁ y allows x and y to also be non-integer, or rational number, which increases the complexity of the encryption. Compared to RSA, the proposed relationship not only allows the message (x), to be a rational number, but also includes an encoding variable (y), which is non-existent in RSA and can also be any integer or rational number. This further increases the complexity of the encryption, thus strengthening security by making unauthorized decryption significantly more difficult. Indeed, when x is an integer and y = 1, the resulting relationship aligns with the RSA algorithm, representing a specific instance of the proposed cryptographic framework. What is more, the complexity of the encryption can be further strengthened by introducing additional encoding variables, such as a second encoding variable (z) (or many such variables as described herein), to the existing relationship, x ▷ y. Specifically, while x ▷ y ▷ z is used to encrypt the message (x) to generate the ciphertext (c), c ◁ z ◁ y may be used in decryption to retrieve the previously encrypted message (x). Here, the second encoding variable (z) is first decoded, followed by the encoding variable (y), to then retrieve the message (x). Similar to x and y, z can also be an integer or a rational number, further increasing the complexity of the encryption. In addition to introducing encoding variables, the complexity of the encryption can be further strengthened by using multiple public key - private key pairs (e-f pairs) for each encoding variable introduced. As such, at a minimum, the complexity of the proposed encryption framework aligns with RSA, potentially extending it.

The subject matter disclosed in the prior application filed in Israel, entitled Quandle-based cryptographic Framework, Application No. 313045, filed on May 22, 2024, which focuses on the quandle-based cryptographic framework, is hereby incorporated by reference in its entirety as if fully set forth herein. This incorporation is intended to provide further details, features, and embodiments related to the encryption methods and systems discussed in the present disclosure, and any modifications or adaptations within the scope of that application are considered applicable to the present system and method.

### Example Shared Network Infrastructure Environment

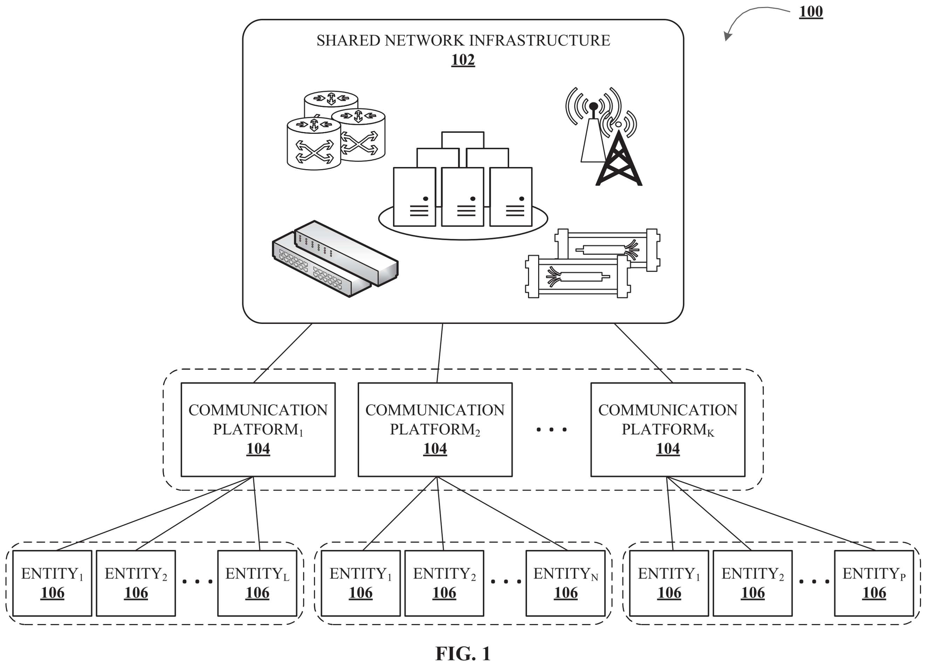

FIG. 1 illustrates a schematic diagram of an example shared network infrastructure environment 100 utilizing quandle-based cryptography, in accordance with an embodiment of the disclosure. The shared network infrastructure environment 100 may include shared network infrastructure 102, communication platform 104, and entity 106. The shared network infrastructure 102 is a cornerstone of the shared network, providing the resources needed to operate and maintain the shared network. The communication platform 104 may mediate communication link between the entities 106 using allocated resources from the shared network infrastructure 102, according to various embodiments described herein. The entity 106 is an end point device from the user or smart service associated with the communication platform 104.

The shared network infrastructure 102 may include resources necessary to operate and maintain a seamless, secure, and efficient network. These resources may comprise physical and logical components essential for security, connectivity, monitoring, management, redundancy, backup, and related functionalities. The physical components may comprise cabling such as fiber optic, Ethernet, coaxial, and power cables; network devices such as routers, switches, access points, and load balancers; and hardware systems like servers, storage systems, backup systems, cooling systems, firewalls, and/or the like. The logical components may comprise IP addressing, subnets, virtual local area networks (VLANs), the Domain Name System (DNS), firewalls, intrusion detection and prevention systems (IDPS), encryption protocols, access controls, network monitoring tools, configuration management systems, and/or other related technologies. In some embodiments, the shared network infrastructure allocates its resources to communication platforms associated with the shared network infrastructure 104 to provide the resources for communication link. Multiple communication platforms may be associated with the shared network infrastructure. In such embodiments, the shared network infrastructure may prearrange the allocation of its resources to communication platforms or dynamically adjust the resource allocation based on the resource demands of the communication platform, such as the number of communication links or the size of the data bandwidth required to be handled. In some embodiments, the shared network infrastructure may pre-allocate a portion of the resources sufficient to handle the initial establishment of the communication link and subsequently increase resource allocation as the communication link progresses.

The communication platform 104 may serve as a mediate system for communication link between the entities 106 using allocated resources from the shared network infrastructure 102. For example, and in some embodiments, the communication platform may establish the communication link using its allocated network resources when a communication link request is received from the entity 106 associated with the communication platform 104. After establishing the communication link, the system may sustain the communication link and monitor its performance to ensure a seamless connection.

In some embodiments, multiple entities 106 may be associated with the communication platform 104. The communication platform may establish and maintain the communication link between the entities associated with the same communication platform. For instance, the communication platform₁ may establish and maintain the communication link between the entity₁ and entity₂, both of which are associated with communication platform₁. The communication platform uses its own allocated network resources for the communication link.

In some embodiments, multiple communication platforms 104 may participate in establishing and maintaining the communication link when the entities 106 requesting the communication link are associated with different communication platforms 104. For instance, communication platform₁ may establish and maintain a communication link between an entity associated with communication platform₁ and an entity associated with communication platform₂. The communication link may be configured to utilize the allocated network resources from both communication platform₁ and communication platform₂. Furthermore, and in some embodiments, the communication platform 104 may establish and maintain a group communication link involving three or more entities. Such a communication link may comprise communication platforms associated with the participating entities and may be configured to use the allocated network resources from all involved communication platforms.

In some embodiments, the communication platform 104 may simultaneously provide multiple communication links to the entity. For example, communication platform₁ may provide Ethernet service to entity₁ while simultaneously offering mobile call services using the allocated resources. Additionally, the communication platform may establish and maintain multiple communication links for multiple entities associated with the communication platform.

The entity 106 may be an end-point device from the user or smart service associated with the communication platform 104. The end-point device may vary depending on the user or smart service. For example, the electronic devices associated with the user may comprise smartphones, laptops, desktop computers, tablets, smart TV, Streaming devices, E-readers, and/or the like. For the smart service, the electronic devices may comprise smart thermostats, smart cameras, smart doorbells, network printers, medical devices, Point-of-Sale (POS) systems, industrial sensors, and/or the like. The end-point devices may encompass a wide range of future electronic devices, including Internet of Things (IoTs). artificial intelligence (AI) assisted communication devices, autonomous communication devices that may be connected to the shared network infrastructures. In some embodiments, the entity 106 may be connected from an external network, wherein the external network is connected to the communication platform.

A challenge associated with shared network infrastructure may be maintaining isolation and security for each entity, whereby preventing interference, unauthorized access, or impact from other entities. This requirement is especially significant in multi-tenant configurations, such as telecommunication network environment and datacenter facilities, wherein the quandle-based cryptography framework may be implanted to facilitate secure communication. For example, and in some embodiments, the network infrastructure 102, the communication platform 104, and the entity 106 may be configured to utilize quandle-based cryptography framework, whereby the communicating data between the entities within the communication link may be encrypted with quandle-based cryptography framework. The communication platform 104 may be configured to generate the quandle-based public-private key pair for the communication link and distribute the keys to involving communication platform 104 and entities 106 during establishing the communication link. In certain embodiments, when the communication platform 104 mediate communication link between the two entities 106 associated with the communication platform 104, the communication platform 104 may generate the quandle-based public-private key pair and distribute the private key to the entities 106. For example, in instance where communication platform₁ facilitates communication link between entity₁ and entity₂, both of entities are associated with communication platform₁, the platform may distribute a private key to entity₁ and entity₂ while retaining the corresponding public key. The communication platform₁ may encrypt the incoming data from entity₁ or entity₂ with the public key, while the entity₁ and entity₂ receiving the encrypted data may decrypt the data with the private key. Additionally, or alternatively, the communication platform 104 may generate two key pairs and distribute the private key for each entity 106, while the communication platform 104 may encrypt the data with corresponding public key.

In some embodiments, two communication platforms 104 may mediate the communication link when the entities 106 requesting the communication link are associated with different communication platforms 104. The communication platform 104 that establishes the communication link may generate the public-private key for the communication link followed by distributing the private key to the entities 106 and public key to the other communication platform 104 associated with the destination entity 106. The communication platforms 104 may encrypt the incoming data from the entities 106 with the public key, while the entities 106 may decrypt the received encrypted data with the private key. Additionally, or alternatively, the communication platform 104 may generate two key pairs and distribute the private key for each entity 106 and corresponding public key to other communication platform 104 associated with the destination entity 106. For example, and in some embodiments, the communication platform₁ may establish the communication link when the entity₁ associated with the communication platform₁ requests the communication link to entity₃ associated with the communication platform₂. The communication platform₁ may generate two public-private keys and distribute the keys during establishing the communication link. The private key₁ may be distributed to entity₃ associated with the communication platform₂, the private key₂ may be distributed to entity₁ associated with the communication platform₁, while the public key₂ may be distributed to communication platform₁ and the public key₁ may retain to communication platform₁. The data from the entity₁ associated with the communication platform₁ is encrypted with public key₁ by the communication platform₁ and routed securely through the communication link to the destination entity (e.g., entity₃ associated with the communication platform₂), followed by the decryption with the private key₁ at the entity₃ associated with the communication platform₂. Similarly, the data from the entity₃ associated with the communication platform₁ is encrypted with public key₂ by the communication platform₁ and routed securely through the communication link to the destination entity (e.g., entity₁ associated with the communication platform₁), followed by the decryption with the private key₂ at the entity₁ associated with the communication platform₁.

In some embodiments, the quandle-based cryptography may be facilitated in the group communication link. The communication platform 104 establishing the communication link may generate the public-private key pair followed by distributing the private key to the involving entities 106 and the public key to the involving communication platform 104 associated with the involving entities 106.

Additionally, and in some embodiments, the length of the encryption key may be switched from shorter length to longer length or vice versa to balance between security and efficiency for the communication link.

### Example Communication Platform Circuitry

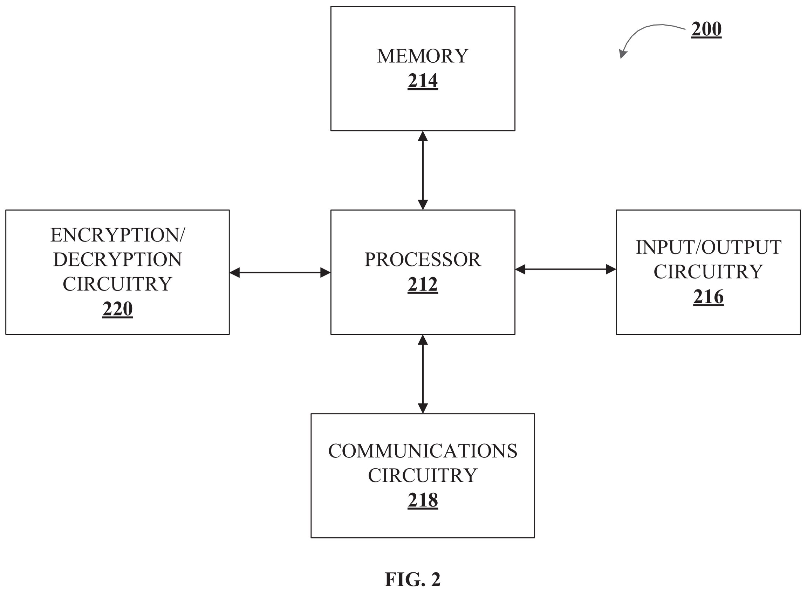

FIG. 2 illustrates a schematic block diagram of example circuitry, some or all of which may be included in the communication platform 104. As shown in FIG. 2, the communication platform 104 may include a processor 212, a memory 214, input/output circuitry 216, communications circuitry 218, and encryption/decryption circuitry 220. It should be understood that FIG. 2 is merely an illustrative embodiment and the communication platform 104 may include more components, fewer components, or different components than those depicted. The arrangement of the components may also vary. Depending on specific implementation requirements, the communication platform 104 may incorporate additional components or omit certain components. Variations in the configuration and composition of the communication platform 104 are within the scope of the disclosure.

Although the term "circuitry" as used herein with respect to components 212-220 is described in some cases using functional language, it should be understood that the particular implementations necessarily include the use of particular hardware configured to perform the functions associated with the respective circuitry as described herein. It should also be understood that certain of these components 212-220 may include similar or common hardware. For example, two sets of circuitries may both leverage use of the same processor, network interface, storage medium, or the like to perform their associated functions, such that duplicate hardware is not required for each set of circuitries. It will be understood in this regard that some of the components described in connection with the communication platform 104 may be housed together, while other components are housed separately. While the term "circuitry" should be understood broadly to include hardware, in some embodiments, the term "circuitry" may also include software for configuring the hardware. For example, in some embodiments, "circuitry" may include processing circuitry, storage media, network interfaces, input/output devices, and the like. In some embodiments, other elements of the communication platform 104 may provide or supplement the functionality of particular circuitry. For example, the processor 212 may provide processing functionality, the memory 214 may provide storage functionality, the communications circuitry 218 may provide network interface functionality, and the like.

In some embodiments, the processor 212 (and/or co-processor or any other processing circuitry assisting or otherwise associated with the processor) may be in communication with the memory 214 via a bus for passing information among components of, for example, the communication platform 104. The memory 214 may be non-transitory and may include, for example, one or more volatile and/or non-volatile memories, or some combination thereof. In other words, for example, the memory 214 may be an electronic storage device (e.g., a non-transitory computer readable storage medium). The memory 214 may be configured to store information, data, content, applications, instructions, or the like, for enabling an apparatus, e.g., the communication platform 104, to carry out various functions in accordance with example embodiments of the present disclosure.

Although illustrated in FIG. 2 as a single memory, the memory 214 may comprise a plurality of memory components. The plurality of memory components may be embodied on a single computing device or distributed across a plurality of computing devices. In various embodiments, the memory 214 may comprise, for example, a hard disk, random access memory, cache memory, flash memory, a compact disc read only memory (CD-ROM), digital versatile disc read only memory (DVD-ROM), an optical disc, circuitry configured to store information, or some combination thereof. The memory 214 may be configured to store information, data, applications, instructions, or the like for enabling the communication platform 104 to carry out various functions in accordance with example embodiments discussed herein. For example, in at least some embodiments, the memory 214 may be configured to buffer data for processing by the processor 212. Additionally, or alternatively, in at least some embodiments, the memory 214 may be configured to store program instructions for execution by the processor 212. The memory 214 may store information in the form of static and/or dynamic information. This stored information may be stored and/or used by the communication platform 104 during the course of performing its functionalities.

The processor 212 may be embodied in a number of different ways and may, for example, include one or more processing devices configured to perform independently. Additionally, or alternatively, the processor 212 may include one or more processors configured in tandem via a bus to enable independent execution of instructions, pipelining, and/or multithreading. The processor 212 may, for example, be embodied as various means including one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an ASIC (application specific integrated circuit) or FPGA (field programmable gate array), or some combination thereof. The use of the term "processing circuitry" may be understood to include a single core processor, a multi-core processor, multiple processors internal to the apparatus, and/or remote or "cloud" processors. Accordingly, although illustrated in FIG. 2 as a single processor, in some embodiments, the processor 212 may include a plurality of processors. The plurality of processors may be embodied on a single computing device or may be distributed across a plurality of such devices collectively configured to function as the communication platform 104. The plurality of processors may be in operative communication with each other and may be collectively configured to perform one or more functionalities of the communication platform 104 as described herein.

In an example embodiment, the processor 212 may be configured to execute instructions stored in the memory 214 or otherwise accessible to the processor 212. Alternatively, or additionally, the processor 212 may be configured to execute hard-coded functionality. As such, whether configured by hardware or software methods, or by a combination thereof, the processor 212 may represent an entity (e.g., physically embodied in circuitry) capable of performing operations according to an embodiment of the present disclosure while configured accordingly. Alternatively, as another example, when the processor 212 is embodied as an executor of software instructions, the instructions may specifically configure the processor 212 to perform one or more algorithms and/or operations described herein when the instructions are executed. For example, these instructions, when executed by the processor 212, may cause the communication platform 104 to perform one or more of the functionalities thereof as described herein.

In some embodiments, the communication platform 104 further includes input/output circuitry 216 that may, in turn, be in communication with the processor 212 to provide an audible, visual, mechanical, or other output and/or, in some embodiments, to receive an indication of an input from a user or another source. In that sense, the input/output circuitry 216 may include means for performing analog-to-digital and/or digital-to-analog data conversions. The input/output circuitry 216 may include support, for example, for a display, touchscreen, keyboard, mouse, image capturing device (e.g., a camera), microphone, and/or other input/output mechanisms. The input/output circuitry 216 may include a user interface and may include a web user interface, a mobile application, a kiosk, or the like. The input/output circuitry 216 may interface with one or more units, devices, sensors, actuators, communication modules, storage devices, external processing units, peripheral devices, and/or the like. These outputs may then be transmitted to one or more destinations, such as display units, storage systems, control systems, processors (e.g., processor 212), network interfaces, peripheral devices, external systems, and/or the like, for further action.

The processor 212 and/or user interface circuitry comprising the processor 212 may be configured to control one or more functions of a display or one or more user interface elements through computer-program instructions (e.g., software and/or firmware) stored on a memory accessible to the processor 212 (e.g., the memory 214, and/or the like). In some embodiments, aspects of input/output circuitry 216 may be reduced as compared to embodiments where the communication platform 104 may be implemented as an end-user machine or other type of device designed for complex user interactions. In some embodiments (like other components discussed herein), the input/output circuitry 216 may be eliminated from the communication platform 104. The input/output circuitry 216 may be in communication with memory 214, communications circuitry 218, and/or any other component(s), such as via a bus. Although more than one input/output circuitry and/or other component can be included in the communication platform 104, only one is shown in FIG. 2 to avoid overcomplicating the disclosure (e.g., as with the other components discussed herein).

The communications circuitry 218, in some embodiments, includes any means, such as a device or circuitry embodied in either hardware, software, firmware or a combination of hardware, software, and/or firmware, that is configured to receive and/or transmit data from/to a network and/or any other device, or circuitry associated therewith. In this regard, the communications circuitry 218 may include, for example, a network interface for enabling communications with a wired or wireless communication network. For example, in some embodiments, communications circuitry 218 may be configured to receive and/or transmit any data that may be stored by the memory 214 using any protocol that may be used for communications between computing devices. For example, the communications circuitry 218 may include one or more network interface cards, antennae, transmitters, receivers, buses, switches, routers, modems, and supporting hardware and/or software, and/or firmware/software, or any other device suitable for enabling communications via a network. Additionally, or alternatively, in some embodiments, the communications circuitry 218 may include circuitry for interacting with the antenna(s) to cause transmission of signals via the antenna(e) or to handle receipt of signals received via the antenna(e). These signals may be transmitted by the communication platform 104 using any of a number of wireless personal area network (PAN) technologies, such as Bluetooth^{®} v1.0 through v5.0, Bluetooth Low Energy (BLE), infrared wireless (e.g., IrDA), ultra-wideband (UWB), induction wireless transmission, or the like. In addition, it should be understood that these signals may be transmitted using Wi-Fi, Near Field Communications (NFC), Worldwide Interoperability for Microwave Access (WiMAX) or other proximity-based communications protocols. The communications circuitry 218 may additionally or alternatively be in communication with the memory 214, the input/output circuitry 216, and/or any other component of the communication platform 104, such as via a bus.

Referring again to FIG. 2, the encryption/decryption circuitry 220 may be configured to manage communication link to implement quandle-based cryptography framework between the entities 106, facilitating secure communication link and data transmission within the shared network infrastructure, as depicted in the shared network infrastructure environment 100. The encryption/decryption circuitry 220 may receive establishment of the communication link request that specify the information required to establish the communication link (e.g., first and second entity, external network information associated with the entities, and/or the like). Upon receiving the request, the encryption/decryption circuitry 220 may determine optimal communication link based on the allocated resources from the shared network infrastructure 102, followed by transmitting quandle-based key pairs (e.g., public or private key) to relevant component (e.g., the entity 106, another communication platform 104 associated with destination entity) of the communication link. The encryption/decryption circuitry 220 may encrypt the incoming data from the entity 106 associated with the communication platform 104 for secure data transmission. In some embodiments, the length of the encryption key may be switched from shorter length to longer length or vice versa to balance between security and efficiency during the communication.

In some embodiments, the communication platform 104 may include hardware, software, firmware, and/or a combination of such components, configured to support various aspects of combinatorial optimization as described herein. It should be appreciated that in some embodiments, the encryption/decryption circuitry 220 may perform one or more of such example actions in combination with another circuitry of the communication platform 104, such as the memory 214, processor 212, input/output circuitry 216, and communications circuitry 218. For example, in some embodiments, the encryption/decryption circuitry 220 may utilize processing circuitry, such as the processor 212 and/or the like, to form a self-contained subsystem to perform one or more of its corresponding operations. In a further example, and in some embodiments, some or all of the functionality of the encryption/decryption circuitry 220 may be performed by the processor 212. In this regard, some or all of the example processes and algorithms discussed herein can be performed by at least one processor 212, and the encryption/decryption circuitry 220. It should also be appreciated that, in some embodiments, the encryption/decryption circuitry 220 may include a separate processor, specially configured FPGA, or ASIC to perform its corresponding functions.

Additionally, or alternatively, in some embodiments, the encryption/decryption circuitry 220 may use the memory 214 to store collected information. For example, in some implementations, the encryption/decryption circuitry 220 may include hardware, software, firmware, and/or a combination thereof, that interacts with the memory 214 to send, retrieve, update, and/or store data.

Accordingly, non-transitory computer readable storage media, which may, for example, be the memory 214, can be configured to store firmware, one or more application programs, and/or other software, which include instructions and/or other computer-readable program code portions that can be executed to direct operation of the communication platform 104 to implement various operations, including the examples described herein. As such, a series of computer-readable program code portions may be embodied in one or more computer-program products and can be used, with a device, communication platform 104, database, and/or other programmable apparatus, to produce the machine-implemented processes discussed herein. It is also noted that all or some of the information discussed herein can be based on data that is received, generated and/or maintained by one or more components of the communication platform 104. In some embodiments, one or more external systems (such as a remote cloud computing and/or data storage system) may also be leveraged to provide at least some of the functionality discussed herein.

It should be noted that the description provided herein is merely one embodiment of the shared network infrastructure environment and the associated components. Various modifications, alterations, and adaptations may be made without departing from the scope of the disclosure. The specific configurations, components, and functionalities described are illustrative and may be replaced or modified in other embodiments depending on the particular requirements of the shared network infrastructure. For example, different network topologies, alternative processing units, or variations in network configurations may be used to achieve similar objectives. As such, the scope of the invention should not be limited by the described embodiment.

### Example Telecommunication Network of Shared Network Infrastructure

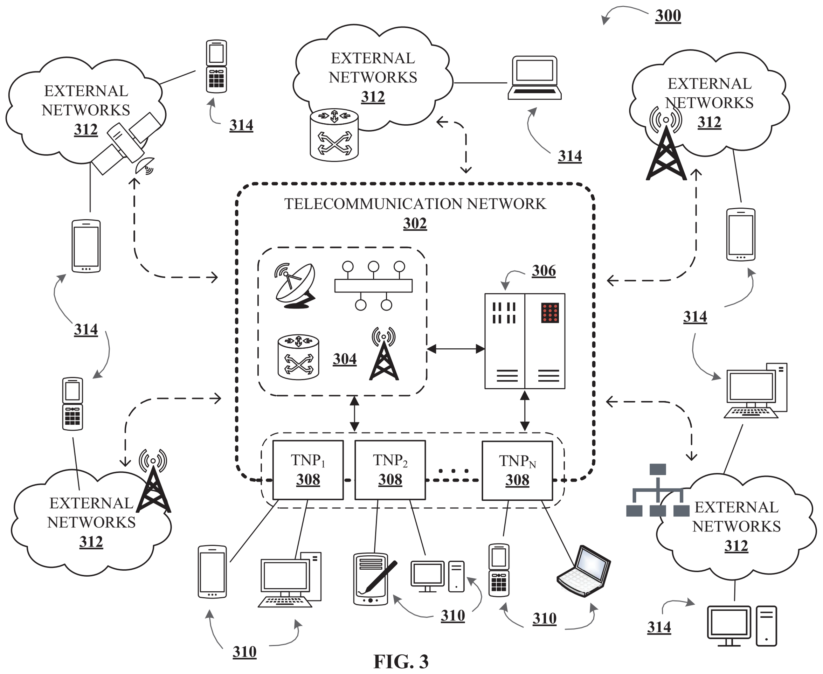

FIG. 3 illustrates a schematic diagram of an example telecommunication network architecture 300 of shared network infrastructure utilizing quandle-based cryptography, in accordance with an embodiment of the disclosure. The telecommunication network architecture 300 may include telecommunication network 302, telecommunication equipment 304, telecommunication management system (TMS) 306, telecommunication network platform (TNP) 308, telecommunication network communication device (TNCD) 310, external networks 312, and external network communication device (ENCD) 314. The telecommunication network 302 is an overall telecommunication network system of the shared network infrastructure that may comprise network resources and management systems. The telecommunication equipment 304 are physical components that operate the telecommunication network 302. The TMS 306 may serve as a centralized management and control system within the telecommunication network system 302, allocating the network resources to TNP 308, managing and configuring the telecommunication equipment 304, and orchestrating the network. The TNP 308 is operated by service providers (e.g., Wireless Network Providers, Broadband and Internet Service Providers, and/or the like) that provides telecommunication services to users or smart services facilitating allocated network resources from the telecommunication network 302 and manages the quandle-based cryptography, according to various embodiments described herein. The TNCD 310 is an end-point device used by the user or smart service that is connected to the allocated network resources to the TNP 308. The external network 312 is an independent network that is connected to the telecommunication network 302, enabling communication beyond the shared network infrastructure. The ENCD 314 is the end-point device used by the user or smart service that is connected to the external network 312.

The telecommunication network 302 is the overall telecommunication network system of the shared network infrastructure. Such a network may comprise cellular network (e.g., 3G, 4G, 5G, and 6G), Ethernet, local area network (LAN), wide area network (WAN), satellite communication network, and/or the like. The telecommunication network 302 may comprise the telecommunication equipment 304 and the TMS 306. In some embodiments, the telecommunication network 302 may encompass the whole or partial functionality of the TNP 308, or the TNP 308 may be directly connected to the telecommunication network 302 as an external component. The TNCD 310 and the external network 312 are directly connected to the telecommunication network 302, wherein the external network 312 extends the connection to the ENCD 314.

The telecommunication equipment 304 are the physical components that operate the telecommunication network. These network resources vary in hardware and function depending on the type of network. For cellular networks, the equipment may comprise cell towers, base transceiver stations (BTS), secondary stations, antennas, radio network controllers (RNC), and network switches to enable wireless voice and data transmission, providing coverage for mobile devices and IoT devices with 3G, 4G, 5G, and 6G capabilities. For Ethernet, the equipment may comprise routers, switches, modems, servers, fiber optic cables, wireless access points (WAPs), and/or the like. For LAN, the equipment may comprise ethernet cables, routers, switches, Wi-Fi access points, and/or the like for data sharing and internet access. For WAN, the equipment may comprise routers, fiber optic cables, modems, WAN accelerators, firewalls, and/or the like. For satellite communication networks, the equipment may comprise ground-based satellite dishes, antennas, and modems to connect with satellites.

The telecommunication management system (TMS) 306 may operate as a centralized management and control system within the telecommunication network system 302. Such a TMS 306 may manage and orchestrate network resources to ensure efficient, secure, and isolated access for multiple users or smart services. For instance, and in some embodiments, the TMS 306 may automatically allocate the telecommunication equipment 304 to the TNP 308 to distribute network resources among multiple service providers. This dynamic allocation ensures efficient utilization of network resources, preventing performance degradation during periods of high demand. Additionally, to optimize the telecommunication network 302, the TMS 306 may track network performance metrics (e.g., latency, packet loss, and/or bandwidth utilization), monitor network health, and manage faults by identifying, isolating, and resolving network issues. Further, the TMS 306 may monitor the shared network resources to detect and prevent security threats; implement encryption including quandle-based cryptography; provide real-time and historical data analytics on network performance, usage patterns, and security events; and facilitate system-wide updates, patches, and upgrades without disrupting network operations to maintain efficient and stable network.

The telecommunication network platform (TNP) 308 may facilitate the allocated network resources (e.g., the telecommunication equipment 304) from the TMS 306 to provide telecommunication services to TNCD 310 or the ENCD 314. Such, the TMS 306 may establish and maintain communication link between the two entities (e.g., the TNCD 310 or the ENCD 304) that is associated with the TMS 306. The two entities may be associated with different TMS 306, whereby the communication link may comprise all the TMS 306 that is associated with the entities. In some embodiments, the TMS 306 may be configured to establish a group communication link that involves more than two entities. Further, the TNP 308 may be configured to implement quandle-based cryptography framework to the communication link to secure and isolate the communication within the telecommunication network 302. For instance, and in some embodiments, the TNP 308 may be configured to establish communication link utilizing the allocated telecommunication equipment 304 when a request for the communication link is received from the associated entity (e.g., the TNCD 310 or the ENCD 314). The TNP 308 generates quandle-based cryptography key pairs for the communication link and distributes the keys to the participating TNP 308, TNCD 310, or ENCD 314, similar to the functionality of the communication platform 104. The private key is distributed to the entities (e.g., TNCD 310 or ENCD 314), and the public key is distributed to the communication platforms (e.g., the TNP 308). Additionally, and in some embodiments, the length of the encryption key may be switched from shorter length to longer length or vice versa to balance between security and efficiency for the communication link.

The telecommunication network communication device (TNCD) 310 may represent various forms of end-point electronic devices from the user and smart service. The TNCD 310 is the entity 106 and comprises all the example electronic devices described in the entity 106. The TNCD 310 is associated with the TNP 308 and directly connected with the telecommunication network 302. In order to facilitate the secure communication link within the telecommunication network 302, the TNCD 310 may be configured to utilize quandle-based cryptography framework, that includes functionality for decrypting incoming encrypted data and encrypting outgoing data.

The external networks 312 represent a range of connectivity options that facilitate communication between the telecommunication network 302 and various independent external networks. These external networks 312 may include another shared networks, cellular networks, Ethernets, LAN/WAN networks, satellite communication networks, private branch exchange (PBX), IoT gateways, repeaters and signal boosters, and/or the like.

The external network communication device (ENCD) 314 may represent end-point devices like TNCD 310 or the devices of the entity 106. However, the ENCD 314 is connected to the telecommunication network 302 through the external networks 312. In order to facilitate the secure communication link within the telecommunication network 302, the ENCD 314 may be configured to utilize quandle-based cryptography framework comprising the functionality for decrypting incoming encrypted data and encrypting outgoing data.

It should be understood that the telecommunication network architecture 300 described herein is merely one embodiment, and various modifications, substitutions, and alternatives may be made without departing from the scope of the disclosure. The specific components, configurations, and functionalities described are illustrative examples and may vary depending on the specific requirements of the shared network infrastructure or telecommunication network environment. For example, different types of network resources, centralized systems, telecommunication network platforms may be used, and the architecture may be adapted to support alternative technologies or configurations. The telecommunication network architecture 300 may also be designed in other forms or combined with additional network equipment or system components to meet particular network performance, scalability, or network needs. Accordingly, the invention is not limited to the described embodiment.

### Example Datacenter Environment

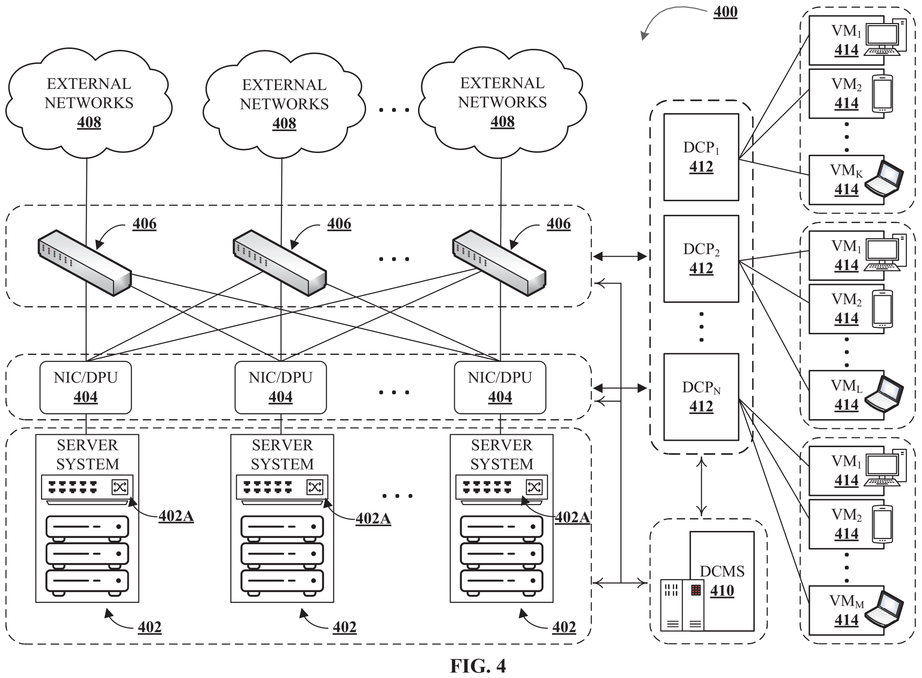

FIG. 4 illustrates a schematic diagram of an example datacenter network architecture 400, in accordance with an embodiment of the disclosure. The datacenter network architecture 400 may include server systems 402, NIC/DPUs 404, datacenter switches 406, external networks 408, datacenter management system (DCMS) 410, datacenter platform (DCP) 412, and virtual machine (VM) 414. The server systems 402 may house computing resources. The NIC/DPUs 404 may act as intermediate processing and management units that facilitate data transmission between server systems 402 and datacenter switches 406. The datacenter switches 406 may manage and route data between the server systems 402 and the external networks 408. The external networks 408 may connect the datacenter network architecture 400 to external devices, services, or other datacenters, enabling communication beyond the datacenter. The datacenter management system 410 may serve as a centralized management and control system within datacenter network architecture 400, overseeing resource allocation, link management, and network optimization. The DCP 412 may mediate communication between the two VMs 414 using Virtual Machine Communication Interface (VMCI) and provide quandle-based cryptography framework to secure communication link, according to various embodiments described herein. The VM 414 is the end-point device (e.g., the entity 106) used by the user.

The server systems 402 may house multiple servers, each containing various computing resources, otherwise referred to as compute resources or compute nodes. These resources may include central processing units (CPUs), such as NVIDIA Grace^{™} CPUs, and graphics processing units (GPUs), such as NVIDIA^{®} H100 Tensor Core GPUs. The servers may also include memory, such as high-bandwidth memory (HBM) for GPUs, and storage devices, such as NVMe (Non-Volatile Memory Express) SSDs for fast data access. Each server within the server systems 102 may be configured to handle specific types of workloads, such as general-purpose computing, data processing, specialized tasks like artificial intelligence (AI) and machine learning (ML) applications, and/or the like. For example, NVIDIA^{®} Tensor Core GPUs may be used to accelerate AI and ML workloads by performing parallel processing of large datasets. The server systems 402 may be connected to one or more datacenter switches 406, allowing the servers systems 402 to communicate with other systems within the datacenter or external networks 408. The configuration of the server systems 402 may be scalable, allowing for additional servers, such as those with NVIDIA^{®} GPUs and CPUs, to be added or removed as needed based on computing requirements.

In some embodiments, the server systems 402 may include top-of-rack (ToR) switches 402A. The ToR switches 402A may connect each server system 402 to the broader datacenter network, typically using high-speed networking protocols such as Ethernet or InfiniBand^{®} protocols. The ToR switches 402A may reduce cable complexity by aggregating server connections within the rack and then linking to higher-layer switches, such as datacenter switches 106, within the datacenter. Each ToR switch may be connected to every server within its rack through short cables, and the switch may then uplink to the datacenter switches 406. ToR switches 402A in the server systems 402 may also support various network features such as VLAN segmentation, load balancing, and quality of service (QoS) management, ensuring optimized traffic flow within the rack and the datacenter as a whole. In some configurations, ToR switches 402A may offer redundancy by employing multiple uplinks to datacenter switches 406, providing fault tolerance in case of a switch or connection failure.

As shown in FIG. 4, the ToR switches 402A may be operatively coupled to NIC/DPUs 404, enabling efficient offloading of data processing and security tasks, further reducing the computational burden on the server CPUs and improving overall data flow within the rack. The NIC/DPU 404, may integrate network interface controller (NIC) and data processing unit (DPU) functionalities to enhance the efficiency of datacenter operations. The NIC/DPU 404 may be configured to offload various network, storage, and security tasks from the server systems 402, in particular, CPUs in the server systems 402, allowing the CPUs to focus on compute-intensive workloads. The NIC/DPU 404 may facilitate high-speed data transmission, optimize data flow, and enable advanced network services with minimal impact on server performance. The NIC component within the NIC/DPU 404 may handle standard network functions, such as packet transmission and reception, supporting high-speed Ethernet or InfiniBand^{®} protocols. By facilitating fast data transfers between the server systems 402 and external networks 408, the NIC enables efficient communication across the datacenter environment. The NIC may also support offloading network protocol processing, reducing the overhead on server systems 402, in particular, CPUs in the server systems 402, and improving overall data throughput. The DPU component of the NIC/DPU 404 may extend these capabilities by offloading more advanced processing tasks, such as data encryption and decryption, packet inspection and filtering, virtualization support, and/or the like. In example embodiments, the NIC/DPU 404 may be NVIDIA BlueField^{®}-2 DPUs, which provide a high-performance platform for datacenter acceleration. The BlueField-2 architecture may include up to 8 Arm cores, enabling the NIC/DPU 404 to execute network, storage, and security tasks independently of the server systems 402, in particular, CPUs in the server systems 402. By performing these tasks closer to the data source, the NIC/DPU 404 may reduce data movement across the network, lower latency, and enhance overall system efficiency.

The NIC/DPU 404 may also include a dedicated memory subsystem, such as dynamic random-access memory (DRAM), to support local processing and ensure high-speed data access. Additionally, the NIC/DPU 404 may be configured to manage NVMe over Fabrics (NVMe-oF) storage protocols, allowing for efficient remote storage access and fast data retrieval. The combined NIC and DPU functionalities within the NIC/DPU 404 may support various advanced networking features, including traffic shaping and load balancing, remote direct memory access (RDMA), virtual machine and container isolation, and/or the like.

In some embodiments, the NIC/DPU 404 may be configured with Type 1 (Bare-Metal) hypervisors, wherein the hypervisor is configured to abstract the physical hardware and enable multiple VMs to operate concurrently on the host NIC/DPU 404. Further, the NIC/DPU 404 may be directly connected to the DCP 412 or connected to the DCP 412 through the datacenter switches 406 to provide VM sessions to the VM 414. In such embodiments, The NIC/DPU 404 may be configured to implement quandle-based cryptography framework to secure VM session from others.

The datacenter switches 406 may manage the data flow between the server systems 402 and the external networks 408. The datacenter switches 406 may be responsible for routing and distributing data between servers within the datacenter and facilitating communication with external networks. Datacenter switches 406 may be configured to support various high-speed network protocols, such as Ethernet or InfiniBand^{®} protocols, depending on the performance and bandwidth requirements of the datacenter. The datacenter switches 406 may include optical switches, which use light signals for data transmission, offering high bandwidth and low latency for long-distance communication. Alternatively, the datacenter switches 406 may include electrical switches, which rely on electronic signals and may be used for shorter distances or when lower latency is a priority. In some configurations, hybrid switches may be used, combining both optical and electrical components to balance performance and flexibility. The datacenter switches 406 may be advanced networking switches, such as Nvidia Quantum-2 switches, configured to provide high throughput capabilities. The datacenter switches 406 may operate at different layers of the network stack, including Layer 2 (data link layer) and Layer 3 (network layer), to perform switching and routing functions. Multiple datacenter switches 406 may be interconnected to provide redundancy and load balancing for reliable data transfer even if one switch fails. The datacenter switches 406 may support scalable configurations, allowing the network architecture to expand as additional server systems 402 or external networks 408 are introduced.

In certain embodiments, the number and arrangement of datacenter switches 406 within the datacenter network architecture 400 may be based on the overall network topology deployed in the datacenter environment. The choice of network topology may influence the scalability, performance, fault tolerance, and bandwidth distribution of the network, thus affecting how many switches are required and how they are interconnected. Examples of network topology may include fat-tree topology, SlimFly topology, dragonfly topology, HyperX topology, torus topology, Clos (folded-Clos) topology, mesh topology and/or the like. For instance, in a fat-tree topology, the network is structured as a multi-tiered hierarchy with equal-cost paths between any two endpoints. The fat-tree topology may be built using three layers of switches: leaf switches at the bottom layer, directly connected to the server systems 402, spine switches in the middle layer, which interconnect the leaf switches, and core switches at the top, which interconnect multiple sets of spine switches. In a SlimFly topology, the datacenter switches 406 may be arranged to minimize the average path length between servers, reducing communication latency. The total number of datacenter switches 406 may be fewer than in fat-tree topology, but their arrangement may be more complex to optimize the number of direct and indirect connections between nodes. Dragonfly topology may organize switches into groups (or "pods"), with high-bandwidth connections within each group and lower-bandwidth connections between groups. The datacenter switches 406 may be arranged into several pods, with each pod containing a set of leaf switches connected to server systems 402 and local spine switches. In addition, there may be fewer inter-pod connections than intra-pod connections. In hyperX topology, switches may be arranged in a multi-dimensional grid, with each switch connected to multiple neighboring switches in different dimensions. The total number of switches may scale with the number of dimensions and network size. In a torus topology, the datacenter switches 406 may be connected in a loop or ring structure. Torus topology may offer reduced wiring complexity and built-in redundancy, as each switch is connected to multiple adjacent switches. In larger datacenters, a higher-dimensional torus (e.g., 3D or 4D torus) may be implemented, where switches are arranged in a multi-layered grid. In a Clos topology, also known as a folded-Clos or CLOS architecture, the datacenter switches 406 may be arranged in multiple layers of switching stages, with each stage containing multiple switches. In this configuration, each server system 402 may connect to a set of leaf switches, which in turn connect to multiple spine switches. Additional spine and leaf switches may be added as the network grows, with the number of datacenter switches 406 increasing in proportion to the number of server systems and external networks connected.

In some embodiments, the datacenter switches 406 may be connected to the DCP 412 and configured to route the VM session from NIC/DPU 404 to VM 414.

The external networks 408 represent a range of connectivity options that facilitate communication between the datacenter and various external systems, such as other datacenters, cloud service providers, and/or the like. These external networks 408 may include local area networks (LANs), which connect devices within a limited geographical area, as well as WANs that span larger distances and connect multiple LANs. Additionally, external networks 408 may include cloud networks, which provide scalable resources and services hosted remotely, and private networks, which offer secure communication channels for sensitive data transfer. Other types of external networks may include virtual private networks (VPNs) that enable secure access over the internet and Content Delivery Networks (CDNs) that optimize the delivery of content to end-users. Each of these external networks may utilize various communication protocols, such as Ethernet, InfiniBand^{®}, or MPLS (Multiprotocol Label Switching) protocols, to ensure reliable and efficient data transfer.

The DCMS 410 may manage and coordinate network resources within the datacenter network architecture 400. The DCMS 410 may be operatively coupled to various components, such as the server systems 402, NIC/DPU 404, network switches 406, and DCP 412 facilitating efficient communication and resource management across the network infrastructure. In specific embodiments, the DCMS 410 may interact with NIC/DPUs 404 to offload specific network management and data processing tasks from the server systems 402. The NIC/DPUs may handle low-level data exchanges and route packets between server systems 402 and network switches 406, enabling DCMS 410 to focus on higher-level management tasks, such as link allocation across the datacenter environment. The DCMS 410 may communicate with NIC/DPUs 404 to monitor network conditions, adjust link allocations in response to changing demands, and ensure optimized data flows across the infrastructure. The DCMS 410 may also be in direct communication with network switches 406, which route data between server systems 402 and external networks 408. Through this interaction, the DCMS 410 may determine the optimal allocation of network links for data transmission across switches 406, minimizing congestion and ensuring efficient resource utilization. the DCMS 410 may adjust link allocations dynamically, managing inter-switch communication in response to varying data loads or operational demand.

Within server systems 402, DCMS 410 may oversee the distribution of computational tasks and manage interconnects between CPUs, GPUs, and other processing resources. For instance, the DCMS 410 may allocate available link bandwidth between CPUs and GPUs based on workload requirements, facilitating high-throughput, low-latency data exchanges as needed for AI, ML, and other computationally intensive applications. In some embodiment, the DCMS 410 may allocate the NIC/DPU 404 and/or the server system 402 to the DCP 412, whereby the DCP 412 may manage VM sessions to provide services to the VMs 414.
Overall, the DCMS 410 may serve as the central control point for link allocation and network resource management within the datacenter network architecture 400, coordinating with NIC/DPUs 404, server systems 402, switches 406, and DCP 412 to ensure efficient resource utilization and optimized data flows across the network.

The datacenter platform (DCP) 412 may mediate the NIC/DPU 404 and the VM 414, wherein the DCP 412 may provide VM session to the VM 414 associated with the DCP 412. The DCP 412 is connected to DCMS 410, wherein the DCMS 410 allocates the datacenter resource (e.g., the server system 402 and NIC/DPU 404) to the DCP 412. The DCP 412 may connect to the allocated datacenter resources directly or through the datacenter switches 406. Additionally, the DCP 412 may be configured to provide a VM-to-VM communication between the two VMs 414 associated with the same DCP 412 using the Virtual Machine Communication Interface (VMCI). The VM-to-VM communication provides low latency communication and utilizes host-contained network to communicate without relying on external networking. Further, the DCP 412 may be configured to facilitate quandle-based cryptography framework to secure the VM-to-VM communication. For instance, and in some embodiments, the DCP₁ may establish communication link (e.g., the VM-to-VM communication) between the VM₁ and VM₂ associated with the DCP₁ upon request from the VM₁. During the process of establishing the communication link, the DCP₁ may generate the quandle-based cryptography key pair (e.g., public-private key pair) and transmit the private key to both VM₁ and VM₂. The data from the VM₁ is encrypted with the public key at the DCP₁ and transmitted to VM₂, wherein the VM₂ may decrypt the encrypted VM₁ data using the private key received from the DCP₁. Similarly, the data from the VM₂ is encrypted with the public key at the DCP₁ and transmitted to VM₁, wherein the VM₁ may decrypt the encrypted VM₂ data using the private key. In some embodiments, the length of the encryption key may be switched from shorter length to longer length or vice versa to balance between security and efficiency during the VM-to-VM communication.

In some embodiments, the whole or partial functionality of the DCP 412 may be implemented to other components in datacenter environment such as NIC/DPU 404, server system 402, and DCMS 410, or the DCP 412 may be directly connected to the datacenter environment as an external component.

The virtual machine (VM) 414 may correspond to the entity 106 that represent various forms of electronic device for users to utilize the VM session and VM-to-VM communication, such as, desktops, laptops, smartphones, tablets, thin client terminals, and/or the like. For the VM session, the VM 414 may connect to the datacenter (e.g., the server system and NIC/DPU 404) through the associated DCP 412. The VM 414 may connect to other VM 414 associated with the same DCP 412 with the communication link established by the DCP 412. In order to facilitate the secure communication link for the VM-to-VM communication, the VM 414 may be configured to utilize quandle-based cryptography framework.

It should be noted that the description provided herein is merely one embodiment of the datacenter network architecture 400 and the associated components, including the datacenter switches 406 and the NIC/DPU 404, the sever system 402, and the DCP 412. Various modifications, alterations, and adaptations may be made without departing from the scope of the disclosure. The specific configurations, components, and functionalities described are illustrative and may be replaced or modified in other embodiments depending on the particular requirements of the datacenter environment. For example, different network topologies, alternative processing units, or variations in server configurations may be used to achieve similar objectives. As such, the scope of the invention should not be limited by the described embodiment.

### Example Server System Architecture

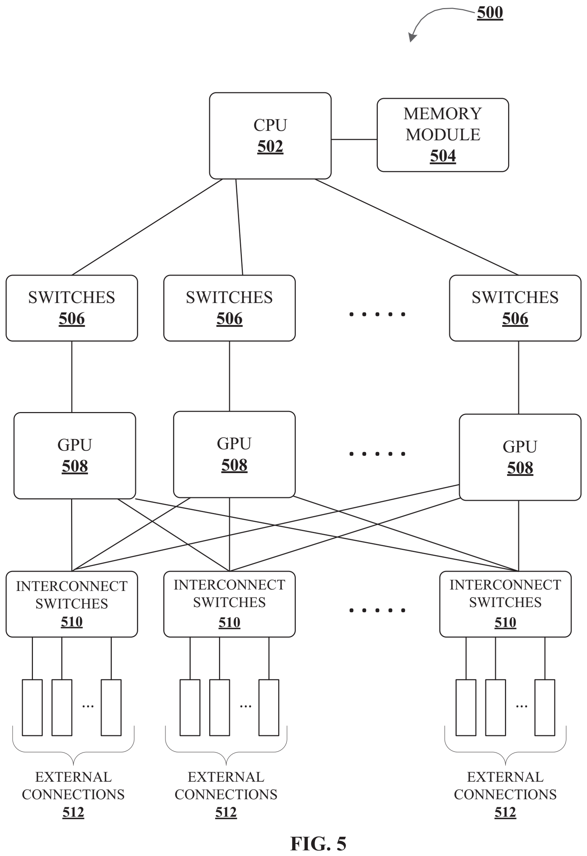

FIG. 5 illustrates a schematic diagram of an example server system architecture 500, some or all of which may be included in the server system 402 of FIG. 4, in accordance with an embodiment of the disclosure. The server system architecture 500 may include a CPU 502, memory modules 504, switches 506, GPUs 508, interconnect switches 510, and external connections 512. The CPU 502 may manage operations within the server system and communicate with the other components. The memory modules 504 may provide fast access to data for the CPU 502. The switches 506 may connect the CPU to the GPUs 508, while the interconnect switches 510 may facilitate communication between the GPUs 508. The external connections 512 may allow the server system to communicate with external networks or other systems.

The CPU 502 may manage overall operations within a server system (e.g., server system 402). The CPU 502 may execute instructions, process data, and control communication between the other components, including the memory module 504, switches 506, and GPUs 508. The CPU 502 may be connected to the memory module 504, providing fast access to data required for computational tasks. The CPU 502 may communicate with the GPUs 508 through the switches 506, enabling the CPU 502 to offload specialized computing tasks such as graphics rendering, AI, and ML workloads, and/or the like. Additionally, the CPU 502 may manage external communication via external connections 512, facilitating data exchange between the server system 402 and external networks 408 or other systems.

In some embodiments, the server system architecture 500 may be scalable to include multiple CPUs that are the same or similar to CPU 502, each managing its own set of resources such as memory, GPUs, and network connections. In such configurations, each CPU may communicate with other CPUs within the system via high-speed interconnects, such as NVLink^{®} interconnects, to coordinate processing tasks and balance workloads. Such a distributed architecture may improve performance by allowing parallel processing across multiple CPUs, which may be particularly useful for data-intensive applications such as AI, ML, and high-performance computing. The server system architecture 500 may allow for the addition of more CPUs as needed, depending on the computing requirements of the workload.

The memory module 504 may provide fast data access for the CPU 502, allowing the CPU to efficiently execute instructions and process data. The memory module 504 may include various types of memory, such as DRAM or high-bandwidth memory (HBM), depending on the specific performance requirements. The memory module 504 may be directly connected to the CPU 502 to minimize latency and enable high-speed data transfers between the memory and the CPU. The size and type of the memory module 504 may be scalable, allowing for adjustments based on the workload and data processing needs of the server system. Multiple memory modules that are the same or similar to the memory module 504 may be included in the architecture to support additional CPUs or to increase memory capacity as required by the computing tasks.

The switches 506 may facilitate communication between the CPU 502, GPUs 508, and other components within the server system 402. These switches 506 may be responsible for routing data between these components, ensuring efficient data flow and coordination during processing tasks. The switches 506 may include various types of technologies, such as Peripheral Component Interconnect Express (PCIe) switches, which connect the CPU to multiple GPUs, enabling high-speed data transfers, Ethernet switches for managing communication with external networks or InfiniBand^{®} switches designed for low-latency, high-throughput data transfers between servers in a high-performance computing environment, and/or the like. The architecture of the switches 506 may be scalable, accommodating additional components as needed to meet increasing performance demands. Furthermore, the switches 206 may provide features such as load balancing and fault tolerance, which improve the reliability and efficiency of data transmission within the server system.

The GPUs 508 may provide specialized processing capabilities for parallel computation tasks, such as those involved in AI, ML, and data-intensive computing workloads. Each GPU 508 may be connected to the CPU 502 via the switches 506, allowing the CPU 502 to offload certain tasks to the GPUs 508 for faster processing. The GPUs 508 may be configured to communicate with one another, either directly or through interconnect switches 510, to enable coordinated parallel processing and data sharing. The GPUs 508 may include HBM for faster access to data during computation. The number and type of GPUs 508 in the system may be scalable, allowing the architecture to accommodate varying performance needs depending on the specific workload. For example, the GPUs 508 may include NVIDIA^{®} H100 Tensor Core GPUs optimized for deep learning and AI inference, or NVIDIA^{®} A100 GPUs designed for high-performance computing and data analytics. The GPUs 508 may be used individually or in combination to meet the demands of various computational tasks.

In specific embodiments, the CPU 502 and/or the GPUs 508, or portions or components thereof, may be embodied as or include a chip or chipset. In other words, the CPU 502 and/or the GPUs 508 may include physical packages (e.g., chips) including materials, components, and/or wires on a structural assembly (e.g., a baseboard). The structural assembly may provide physical strength, conservation of size, and/or limitation of electrical interaction for component circuitry included thereon. The CPU 502 and/or the GPUs 508, may therefore, in some cases, be configured to implement an embodiment of the disclosure on a single chip or as a single "system on a chip (SoC)." As such, in some cases, a chip or chipset may constitute means for performing one or more operations for providing the functionalities described herein. In this configuration, the CPU may be coupled to a GPU via die-to-die (D2D) interconnects, chip-to-chip (C2C) interconnects, such as a Ground-Referenced Signaling (GRS) interconnect, and/or the like, allowing for low-latency communication and high bandwidth between the CPU and GPU. Additionally, the CPU can connect to multiple GPUs using both D2D/C2C interconnects and high-speed interconnects, such as PCIe interconnects.

The interconnect switches 510 may facilitate communication between the GPUs 508, enabling high-speed data transfer and coordination for parallel processing tasks. These switches may include various types of interconnect technologies, such as NVIDIA^{®} NVSwitches or other high-performance fabric switches, depending on the configuration. The high-speed interconnect switches 510 may allow multiple GPUs 508 to be interconnected in a fully integrated fabric, providing low-latency, high-bandwidth communication between the GPUs for efficient execution of AI, ML, and high-performance computing tasks. The interconnect switches 510 may support scalability, allowing additional GPUs 508 to be added as needed. These interconnect switches 510 may also manage data flow between GPUs 508 and the CPU 502 via the switches 506, optimizing data throughput for complex computational workloads. In some configurations, the interconnect switches 510 may support hybrid or optical interconnect technologies to enhance performance based on system requirements.

The external connections 512 may provide interfaces between the server system 402 and external networks (e.g., external networks 408 shown in FIG. 4), via intermediate components (e.g., datacenter switches 406, NIC/DPU 404, and/or the like), facilitating communication with other datacenters, cloud service providers, or wide area networks (WANs). These connections may include pluggable modules (e.g., OSFP modules) or similar high-speed transceivers designed for efficient data transmission. The external connections 512 may support various networking protocols, such as Ethernet or InfiniBand^{®} protocols, depending on the requirements for data transfer speed and distance. Each external connection 512 may be linked to the switches 506 or interconnect switches 510, allowing for seamless data flow between the server system and external entities. The server system architecture may also support redundancy in external connections 512 to ensure continuous network availability, even in the event of a failure in one connection.

It should be understood that the server system architecture 500 described herein is merely one embodiment, and various modifications, substitutions, and alternatives may be made without departing from the scope of the disclosure. The specific components, configurations, and functionalities described are illustrative examples and may vary depending on the specific requirements of the server system or datacenter environment. For example, different types of CPUs, GPUs, memory modules, interconnect switches, and external connections may be used, and the architecture may be adapted to support alternative technologies or configurations. The server system architecture 500 may also be implemented in other forms or combined with additional hardware or software components to meet particular performance, scalability, or workload needs. Accordingly, the invention is not limited to the described embodiment.

### Example High-Performance Computing (HPC) Cluster

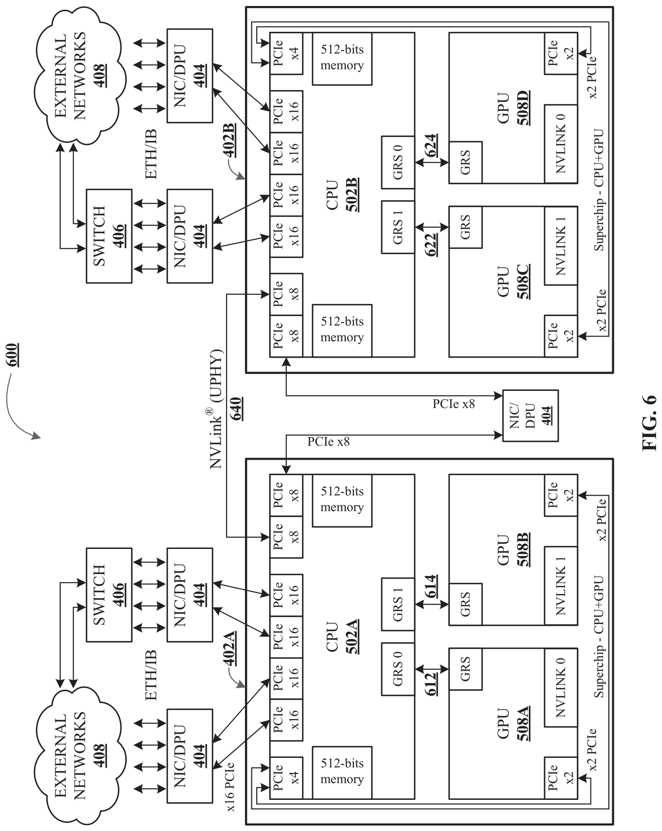

FIG. 6 illustrates a schematic diagram of an example HPC cluster 600 within a server system, such as server system 402, in accordance with embodiments described herein. The HPC cluster 600 may comprise multiple interconnected processing devices, including CPUs, GPUs, and NICs/DPUs, forming a scalable and flexible computational architecture. The HPC cluster 600 may support high-speed communication and data exchange through NVLink^{®} or other high-speed interconnects, as well as connectivity to external networks through NIC/DPU components.

The HPC cluster 600 may include server systems 402A and 402B. Each server system may integrate multiple CPUs, GPUs, and memory components, connected through high-speed interconnects such as PCIe and Ground-Referenced Signaling (GRS) interconnects. Server system 402A may include CPU 502A, which may communicate with two GPUs, GPU 508A and GPU 508B, via die-to-die (D2D) or chip-to-chip (C2C) interconnects 612 and 614, respectively. Similarly, server system 402B may include CPU 502B, connected to GPUs 508C and 508D through D2D or C2C interconnects 622 and 624, respectively. Both CPUs may also be connected to GPUs via PCIe interconnects, enabling flexible data exchange.

The server systems may be coupled to external networks 408 through NIC/DPU components 404. For instance, CPU 502A in server system 402A may be connected to NIC/DPU 404, which may interface with external networks via a switch 406 using Ethernet (ETH) or InfiniBand (IB) connections. Similarly, CPU 502B in server system 402B may be connected to NIC/DPU 404, enabling data transfer to the external networks. The NIC/DPU components may facilitate high-speed communication between the HPC cluster and the broader datacenter network, offloading network processing tasks from CPUs and reducing computational overhead.

Server systems 402A and 402B may be interconnected through high-bandwidth interconnect 640, such as an NVLink^{®} or Unified Physical Layer (UPHY) interconnect, allowing for data transfer and synchronization between the server systems. The high-bandwidth interconnect 640 may support parallel processing and may improve the overall computational throughput of the HPC cluster, making it suitable for applications like artificial intelligence (AI), machine learning (ML), and data-intensive simulations.

Each server system within the HPC cluster may be further equipped with 512-bit memory modules to provide data access for both CPUs and GPUs. The memory modules may be directly connected to the respective CPUs, reducing latency and supporting high-speed operations. The GPUs within each server system may be interconnected via NVLink^{®} interconnects (e.g., NVLink 0 and NVLink 1 for GPUs 508A and 508B in server system 402A), allowing coordinated parallel processing across GPUs for computationally demanding workloads.

The HPC cluster 600 may integrate advanced network capabilities through its NIC/DPU components, which may support tasks such as data encryption, virtualization, and remote direct memory access (RDMA). These components may be capable of managing multiple network protocols, including Ethernet and InfiniBand, to optimize data flow within the datacenter and to external systems.

In certain embodiments, the NIC/DPU components and switches in FIG. 6 may utilize datacenter management system (DCMS) 410 or datacenter platform (DCP) 412 for resource allocation and network configuration, as described earlier. For instance, the DCMS 410 may dynamically allocate bandwidth between the CPUs and GPUs in server systems 402A and 402B based on workload requirements, while the DCP 412 may manage secure virtual machine (VM) sessions through NIC/DPU 404.

The architecture shown in FIG. 6 may demonstrate a multi-GPU configuration within an HPC cluster, allowing for execution of AI, ML, and high-performance computing tasks. The high-speed interconnects, combined with scalable server systems, may accommodate varying computational demands, supporting performance and connectivity across the datacenter environment. This configuration may be adaptable, supporting future scalability through the addition of CPUs, GPUs, and network devices as needed.

The HPC cluster 600, as depicted, may provide a representative example of a high-performance computational architecture. Variations and modifications to the described configuration may be implemented to address specific datacenter requirements or to incorporate alternative technologies and network topologies, without departing from the scope of the disclosure.

### Example Method for Secure Quandle-Based Encryption in a Shared Network Infrastructure

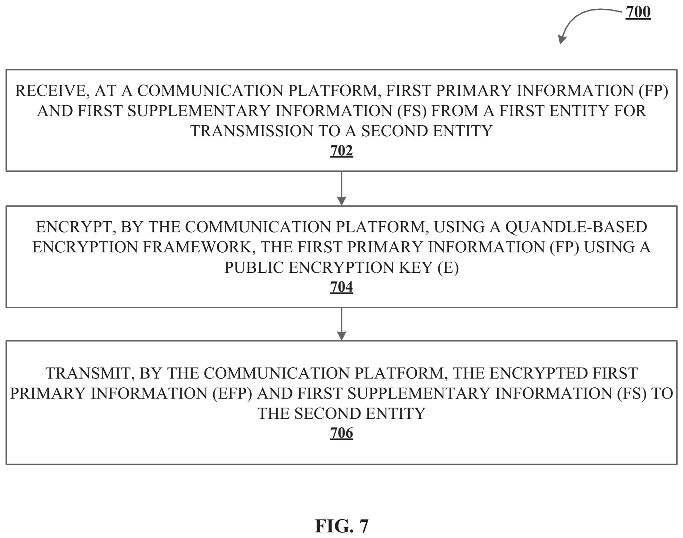

FIG. 7 illustrates an example method 700 for secure quandle-based encryption in a shared network infrastructure, in accordance with an embodiment of the disclosure. As shown in block 702, first primary information (fp) and first supplementary information (fs) are received at a communication platform from a first entity for secure transmission to a second entity. In some embodiments, the first entity and the second entity may be associated with the same communication platform. In such scenarios, the communication platform may facilitate secure data transmission directly within its managed infrastructure. Both entities may operate under the same administrative or service domain, allowing the platform to handle the receipt, encryption, and transmission of the first primary information (fp) and first supplementary information (fs) without external dependencies. In some embodiments, the first entity and the second entity may be associated with different communication platforms operating within the same shared network infrastructure. In such scenarios, the communication platforms may coordinate to ensure secure data transmission between the entities, as described in further detail herein.

The first primary information (fp) may include sensitive data that requires encryption for confidentiality, such as identification details, communication content, or session-specific information. The first supplementary information (fs) may include non-sensitive data or metadata necessary for routing, operational management, or identification purposes. In examples where the communication platform is associated with a telecommunication network, the first primary information (fp) may include communication data, entity location information, private entity identification information, and/or the like. The first supplementary information (fs) in this context may include public entity identification information, communication duration, metadata associated with the communication data, and/or the like. In examples where the communication platform is associated with a datacenter environment, the first primary information (fp) may include source code files, contents of a VM's memory snapshot, private identification information, database records, and/or the like. The first supplementary information (fs) in this case may include VM metadata, database schema, file metadata, access control information, and/or the like.

Upon receiving (fp) and (fs), the communication platform may verify the origin and authorization of the first entity to ensure compliance with the shared network infrastructure's access policies. In one embodiment, this process may include an initial handshake or authentication protocol, where the first entity's access rights and credentials are validated. The communication platform may also store or buffer (fp) and (fs) temporarily, based on the encryption and transmission needs, allowing for flexible management of incoming data. In an alternative embodiment, the communication platform may retrieve additional contextual or auxiliary information associated with (fp) and (fs) to support encryption and transmission. For instance, the communication platform may gather network status data or session identifiers to support efficient routing within the shared infrastructure.

In some embodiments, the communication platform may initiate the establishment of a secure communication link (e.g., a first initial communication link) between the first and second entities to facilitate the transmission of encrypted data. The communication link establishment process may involve initial signaling exchanges and configuration settings that define the parameters for secure communication, such as encryption protocols, routing preferences, or any specific data handling requirements, and/or the like. In some embodiments, this process may include negotiating security parameters specific to the session or data type, allowing the communication platform to adapt the link for optimal performance and security based on the nature of the data being transmitted. For instance, if the first primary information (fp) contains highly sensitive data, the communication platform may establish a link with secure encryption protocols or isolation settings to further limit unauthorized access.

Alternatively, the communication platform may establish the link by coordinating with other communication platforms within the shared network infrastructure. This coordination may be necessary when entities are managed under different communication platforms, such as network segments or service providers, enabling the communication platform to route the link through intermediary nodes while maintaining data confidentiality and integrity across the shared infrastructure. In another embodiment, the communication link may include multiple transmission channels, allowing data to be divided and sent across different paths. Such a multi-path configuration may improve data security through route diversification and load balancing, ensuring that even if one channel encounters interference or unauthorized access, the integrity and confidentiality of the data remain intact. By establishing this communication link, the communication platform may create a secure path for transmitting encrypted data between the first and second entities, ensuring compliance with the shared network infrastructure's policies and the encryption requirements set by the quandle-based cryptographic framework.

As shown in block 704, the first primary information (fp) is encrypted using a public encryption key (e) by the communication platform using a quandle-based cryptographic framework.

In some embodiments, to facilitate the quandle-based cryptography framework, the communication platform may be configured to assign quandle-based cryptography key pairs (e.g., private-public key pair) to participating components (e.g., the entities, other communication platforms, etc.) during the communication link establishment. For instance, the communication platform may be configured to use a unique key pair for each session. During communication link establishment, the private key may be assigned to the entities involved, while the public key may be assigned to all the communication platforms associated with the entities within the established communication link. Alternatively, or additionally, the communication platform may be configured to assign key pairs for each of the entities. For instance, a first private key may be assigned to the second entity to decrypt information encrypted with a first public key at the first entity's side. Similarly, a second private key may be assigned to the first entity to decrypt information encrypted with a second public key at the second entity's side. The communication platform may retain first public key to encrypt the information from the first entity, while the second public key may be retained to the communication platform or assigned to another communication platform associated with the second entity when the second entity is under a different service provider.

In an example embodiment, the communication platform may operate within a telecommunication network serving as the shared network infrastructure, as shown in FIG. 3. In this context, the communication platform may function as a secure intermediary for encrypted communication between devices or entities connected through the telecommunication network. The communication platform may utilize the telecommunication network's existing infrastructure, including routing nodes, base stations, and network cores, to facilitate data exchange while maintaining data confidentiality and isolating communication sessions from unauthorized access. To implement quandle-based cryptography within a telecommunication network, the communication platform may assign unique cryptographic key pairs to each communication instance, where these key pairs are specifically configured to align with telecommunication protocols. During communication link establishment, the platform may assign a private key to user devices (e.g., mobile phones, tablets) or other network-connected entities, while a corresponding public key is provided to all relevant communication platforms within the network link, ensuring consistent encryption and decryption capabilities across the infrastructure.

In scenarios where multiple communication platforms (e.g., service providers) share the telecommunication network, the communication platform may manage key distribution by coordinating with other communication platforms to prevent data leakage therebetween. For example, if the second entity operates under a different service provider than the first entity, the platform may assign a second public key specific to the second provider's network segment, enabling secure interoperability without compromising the data security of either provider's users. This configuration allows the communication platform to support secure, cross-platform communication while respecting the multi-tenant nature of the telecommunication network infrastructure.

In another example embodiment, the communication platform may operate within a datacenter environment that serves as the shared network infrastructure. In this context, the communication platform may provide secure communication links between virtual machine (VM) instances hosted within the datacenter, enabling encrypted data exchange across multiple VM sessions managed by different clients. By leveraging the datacenter's existing infrastructure (as described in FIGS. 4-6, the communication platform facilitates secure, isolated communication sessions that allow for multi-tenant operations without compromising data confidentiality. The data center environment may host numerous VMs, each potentially belonging to a different client or application. These VMs may perform a variety of functions, such as processing sensitive customer data, running application workloads, or storing proprietary information. In such a multi-tenant setup, the communication platform ensures that sensitive information exchanged between VMs remains confidential and secure, even as the underlying infrastructure is shared among different clients.

To support quandle-based cryptography in a datacenter environment, the communication platform may generate and assign unique cryptographic key pairs for each VM session, with key assignments configured to align with the datacenter's security policies. During communication link establishment, the communication platform may assign a private key to each VM instance involved in the communication, allowing each VM to decrypt incoming information. Correspondingly, a public key is assigned to the communication platform or any associated platforms that manage inter-VM data transmission, ensuring that data sent from one VM to another is encrypted according to quandle-based cryptographic principles.

In configurations where the datacenter hosts VMs for multiple clients, the communication platform may assign and manage key pairs in a way that prevents cross-client data exposure. For instance, if a VM associated with one client requires secure communication with a VM associated with another client, the platform may generate separate encryption keys specific to each client. This approach ensures that each client's data remains isolated within the shared infrastructure, with encryption and decryption restricted to authorized VMs only. Additionally, the communication platform may assign distinct public keys to different VM clusters or network segments, allowing secure communication within specific groups of VMs while maintaining data separation across client boundaries.

Furthermore, the communication platform may tailor key management and encryption processes based on the requirements of different VM workloads within the datacenter. For instance, short-lived VM instances, such as those used for temporary data processing, may be assigned session-specific encryption keys that expire upon session termination. For long-term or persistent VMs, the platform may assign keys with longer validity periods or implement periodic key rotation to enhance security over extended operational lifespans. This approach allows the communication platform to optimize key management for a wide range of VM configurations, ensuring data confidentiality and integrity across the datacenter's virtualized environment.

The nature, type, and structure of the data may inform the encryption approach, as different types of data may require specific handling. The nature of the first primary information (fp) can vary widely depending on its intended use and the context in which it is being communicated. For example, first primary information (fp) may be textual data, such as messages, emails, documents, and/or the like; numerical data, such as financial information, scientific data, and/or the like; and/or multimedia data, such as images, audio, and video files, and/or the like. Similarly, the structure of the first primary information (fp) may also depend on its intended use and context. For example, the first primary information (fp) may be linear text, where the data is a sequence of characters or numbers, often with a defined beginning and an end; structured data, where the data adheres to a specific format or schema, such as JavaScript Object Notation (JSON), Extensible Markup Language (XML), or Comma Separated Values (CSV) files, where the arrangement of the data conveys meaning; or unstructured data, where the information does not have a pre-defined data model.

Due to the diverse nature of the first primary information (fp), prior to being encrypted, the first primary information (fp) may be transformed into a uniform format that the encryption algorithm can efficiently process, ensuring that the intrinsic characteristics of the original data-regardless of its type and/or structure-are preserved and translated into a numerical or binary format. Such a transformation may be governed by specific encoding standards, which dictate how different types of data are represented numerically. For example, the first primary information (fp) may be transformed using American Standard Code for Information Interchange (ASCII), Unicode, binary encoding, hexadecimal encoding, and/or the like. By standardizing the representation of various data types, the transformation ensures that encryption algorithms can apply their mathematical transformations uniformly, regardless of the original data's nature. As such, regardless of the initial form of the first primary information (fp), the first primary information (fp) can be transformed into either an integer format, non-integer format, rational numbers, and/or the like to comply with the operational requirements of the cryptographic algorithm described herein.

The communication platform may be configured to encrypt the first primary information (fp) associated with the first entity to generate the encrypted first primary information (efp). The encryption process may use a quandle-based cryptographic framework, which applies the mathematical properties of a quandle to ensure secure and reversible encryption, as described herein. Specifically, the encrypted first primary information (efp) may be generated based on the first primary information (fp), an encoding variable (y), and/or the public key (e).

The public key (e) may refer to a portion of the public-private key pair that can be shared openly without compromising the security of the cryptographic system. In specific embodiments, the public key (e) may be managed by the communication platform to ensure secure encryption of the first primary information (fp) during transmission. The management of the public key (e) may involve its generation, distribution, and application within the shared network infrastructure. For instance, the communication platform may generate the public-private key pair (e-f) internally. During this process, the public key (e) is designated for encrypting the first primary information (fp), while the corresponding private key (f) is securely stored by the platform. This approach ensures that the platform retains full control over the cryptographic process, enabling secure key management without relying on external systems. The public key (e) may then be shared with the entities or other communication platforms involved in the communication session, enabling them to securely transmit encrypted information over the shared infrastructure. In another embodiment, the public-private key pair may be generated by an external source, such as a trusted third-party key management service, a dedicated hardware security module (HSM), a centralized cryptographic server, the entities (e.g., the receiving entity, such as the second entity) and/or the like. The external source may transmit the generated key pair to the communication platform, which may then assume responsibility for using the public key (e) to encrypt the first primary information (fp). This arrangement allows the communication platform to offload key generation while maintaining control over the encryption process and ensuring secure data handling during transmission. Alternatively, in certain scenarios, the public key (e) may be pre-assigned or pre-distributed to the communication platform as part of a broader network security strategy. For example, in multi-tenant environments where several communication platforms operate within the same shared infrastructure, a centralized authority may distribute standardized key pairs to ensure compatibility and interoperability between platforms. The communication platform, upon receiving the public key (e), integrates it into its encryption framework to secure data exchange. Additionally, the management of the public key (e) by the communication platform may involve periodic key rotation to enhance security. For instance, the platform may generate or request new key pairs for long-lived communication sessions or upon detecting potential security vulnerabilities. By actively managing the lifecycle of the public-private key pairs, the communication platform ensures the integrity and confidentiality of encrypted data, even within non-proprietary shared network infrastructures.

The public key (e) may be a large prime number or have a large prime factor. For example, the public key (e) may satisfy the condition 1 < e < ϕ(n), where ϕ(n) is Euler's totient function. Here, ϕ(n) = ϕ(p · q) *=* (p - 1) · (q - 1). Furthermore, the public key (e) may be coprime to ϕ(n), ensuring the public key (e) has an inverse modulo ϕ(n), a necessary condition for the corresponding private key (f) to exist, where the private key (f) is the number that satisfies the equation e · f = 1 mod ϕ(n). In other words, e is chosen such that the product of e and 1, when divided by ϕ(n), leaves a remainder of 1. Alternatively, or additionally, the public key (e) may satisfy the condition 1 < e < λ(n), where λ(n) is a Carmichael's totient function. Here, λ(n) = λ(p · q) = Icm(p - 1, q - 1), where lcm is least common multiple. Similarly, e may be coprime to λ(n), ensuring that e has an inverse modulo λ(n), a necessary condition for the corresponding private key (f) to exist, where f is the number that satisfies the equation e · f = 1 mod λ(n).

The encoding variable (y) may be a parameter used in the encryption process to modify the first primary information (fs) prior to or during the encryption operation. In example embodiments, similar to the public key (e), the encoding variable (y) may also be generated by an intended recipient and communicated to the transmitter. Alternatively, or additionally, the encoding variable (y) may be generated by the transmitting party and transmitted to the intended recipient along with the public key (e) and ciphertext (c) for digital signature verification purposes. Alternatively or additionally, the encoding variable (y) may not be publicly communicated between the parties and may instead be communicated via a secure key distribution protocol, such as quantum key distribution (QKD). The encoding variable (y) may be a constant, a randomly generated number, a value derived from some aspect of the encryption scheme, and/or the like. The encoding variable (y) may add a layer of complexity to the encryption process, making the resulting encrypted first primary information (efp) more secure. As such, in the encryption algorithm described herein, the encoding variable (y) may be a rational number that is not equal to 1.

To encrypt the first primary information (fp), the first entity may employ a binary operation, ▷ , that satisfies the axioms of a quandle. Specifically, the encrypted primary information (efp) = fp ▷ y, and $fp ▷ y = y {\left(\frac{fp}{y}\right)}^{e}$. In an example embodiment, the first primary information (fp) may satisfy the condition 0 ≤ fp ≤ n - 1, where n is a composite number of the form, n = p · q, and p and q are prime numbers. The choice of n as a product of two prime numbers underpins the security of the encryption algorithm. The difficulty of factoring n back into its prime components without prior knowledge of p and q makes it computationally difficult for unauthorized parties to decrypt the primary information without access to the corresponding private key (f).

At block 706, the communication platform transmits the encrypted first primary information (efp) and the first supplementary information (fs) to the second entity. The encrypted first primary information (efp) may be securely routed over the shared network infrastructure, ensuring that sensitive data remains confidential throughout the transmission process. The first supplementary information (fs), which may contain metadata or non-sensitive operational data, may be transmitted alongside the encrypted information to support routing and identification functions. In specific embodiments, the communication platform may coordinate with intermediary platforms or nodes within the shared infrastructure to ensure successful delivery to the second entity. In such cases, the encrypted first information (efp) remains inaccessible to these intermediaries, as the encryption relies on a public key (e) that only the second entity or its associated platform can decrypt using the corresponding private key (f).

Upon receiving the encrypted first information (efp) and the first supplementary information (fs), the second entity may generate a deciphered form (fp') of a first primary information (fp) based on the encrypted first primary information (efp), the encoding variable (y), and the private key (f), wherein fp' = efp ◁ y. Here, ◁ is a binary operation that satisfies the axioms of quandle and/or rack, and $efp ◁ y = y {\left(\frac{efp}{y}\right)}^{f}$. This operation transforms the encrypted first primary information (efp) into a deciphered form (fp') of the primary information (fp).

In a telecommunication network environment, the communication platform transmits the encrypted first primary information (efp) and the first supplementary information (fs) to the second entity, such as a mobile device or communication endpoint, over the shared network infrastructure. The communication platform may leverage secure protocols, such as LTE encryption mechanisms or 5G secure channel protocols, to ensure the data's integrity and confidentiality during transmission. The first supplementary information (fs) may include metadata such as call duration, routing details, or public identifiers required for network operations, while the encrypted first primary information (efp) protects sensitive details like location data or private identifiers, as described herein. If intermediary nodes, such as network base stations or regional hubs, are involved in the transmission, they route the encrypted data without accessing its content, as only the second entity possesses the private key (f) to decrypt it. Upon receiving the encrypted data, the second entity uses its private key (f) and the encoding variable (y) to compute a deciphered form (fp') of the first primary information (fp) by applying the quandle operation, fp'=efp ◁ y. This ensures that sensitive data remains secure, even within a non-proprietary telecommunication network.

In a datacenter environment hosting multiple virtual machines (VMs), the communication platform transmits the encrypted first primary information (efp) and the first supplementary information (fs) between VMs managed by different clients or applications. The shared datacenter infrastructure, including virtualized network environments, ensures that (efp) and (fs) are routed securely through software-defined network (SDN) controllers or hypervisors. The first supplementary information (fs) may include operational metadata such as VM identifiers, file metadata, or database schema information required for routing and execution within the datacenter. The encrypted first primary information (efp) may contain sensitive data such as database records or memory snapshots. If the data traverses multiple intermediary platforms, such as cluster nodes or storage gateways, these intermediaries handle the data without decryption, as only the destination VM possesses the private key (f) to decipher the encrypted content. Upon receipt, the destination VM applies the quandle-based operation, fp'=efp ◁ y, to generate a deciphered form (fp') of the first primary information (fp). This ensures that sensitive client data remains secure and isolated within the shared datacenter environment.

### Example Method for Continued Secure Communication between Entities

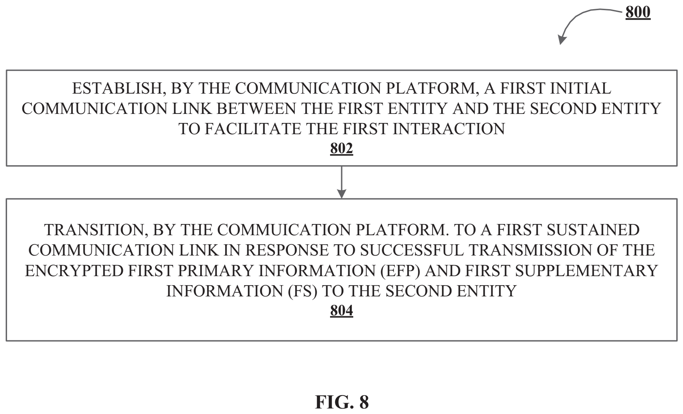

FIG. 8 illustrates an example method 800 for continued secure communication between entities, in accordance with an embodiment of the disclosure. At block 802, the communication platform establishes a first initial communication link between the first entity and the second entity. The first initial communication link may be used to facilitate the first interaction between the two entities and provides a secure channel for the first entity to transmit data necessary for the authentication process. The first initial communication link may serve as a transient channel for preliminary data transmission, such as authentication credentials, session identifiers, or metadata necessary for configuring a more secure communication pathway. In some embodiments, the communication platform may initiate the first initial communication link using existing shared network infrastructure components, such as intermediary nodes or routing devices, to quickly establish connectivity between the entities. These intermediary components may relay data without requiring full cryptographic validation, relying instead on lightweight mechanisms like hash-based integrity checks or pre-shared session tokens to verify the authenticity of the transmitted information. As such, the first initial communication link may be temporary and may be based on a short public key (e). In specific embodiments, the short key may have a key length that may be less than or equal to 1024 bits, allowing for a balance between security and efficiency during the early stages of communication.

At block 804, the communication platform may transition to a first sustained communication link in response to successful transmission of the encrypted first primary information (efp) and first supplementary information (fs) to the second entity. In some embodiments, in addition to the successful transmission of (efp) and (fs), the transition to the first sustained link may be triggered by other conditions being met. For instance, the communication platform may initiate the transition after verifying that essential session parameters, such as updated cryptographic keys (e.g., public-private key pair) or encoding variables, have been exchanged and confirmed by the entities. The communication platform may also rely on the completion of entity authentication processes, ensuring that both the first and second entities have been validated through mechanisms such as mutual authentication protocols, digital signature verification, or pre-shared key validation.

Integrity checks on data exchanged during the initial link, such as hash verification or matching validation codes, may further signal the platform's readiness to transition. In some embodiments, the transition may be governed by session policies or predefined time constraints, where the initial link is maintained only for a limited duration or until a specific threshold of data has been transmitted. Additionally, the communication platform may respond to explicit requests from one or both entities, indicating that they are prepared for a stronger and more secure communication channel.

The platform may prioritize transitioning to a sustained link when it detects the imminent transmission of sensitive data, such as private identification information or proprietary content, to ensure higher security for the communication session. In multi-platform or intermediary-node scenarios, the transition may occur once routing paths have stabilized, ensuring that the sustained link can accommodate secure and efficient data flow. Resource availability, such as bandwidth or cryptographic processing capacity, may also influence the timing of the transition to ensure the sustained link is fully operational.

When transitioning from the first initial communication link to the first sustained communication link for continued interactions, the communication platform may use a longer public encryption key (e) than was used during the first initial communication link. In specific embodiments, the long key may have a key length that may be equal to or greater than 2048 bits. The sustained communication link may establish a higher level of security and is used for all future communications between the entities. The use of the first sustained communication link may protect sensitive data during extended interactions and ensures that subsequent transmissions remain secure throughout the session.

It should be noted that the terms "short key" and "long key" as used herein are relative and may evolve over time as encryption standards and computational capabilities advance. In the present disclosure, a short key may refer to a key length that provides a balance between security and efficiency for initial communication links. Similarly, a long key may refer to a key length that ensures enhanced security for sustained communication links. However, as technology progresses and computational power increases, the definitions of short and long keys may shift to accommodate higher levels of security. For example, what is currently considered a long key may become a short key in future implementations as encryption requirements grow more stringent. Thus, the use of specific key lengths in this disclosure is intended to be illustrative and not limiting, and the key lengths for short and long keys may vary depending on future developments in encryption technology and security standards.

Many modifications and other embodiments of the present disclosure set forth herein will come to mind to one skilled in the art to which these embodiments pertain having the benefit of the teachings presented in the foregoing descriptions and the associated drawings. Although the figures only show certain components of the methods and systems described herein, it is understood that various other components may also be part of the disclosures herein. In addition, the method described above may include fewer steps in some cases, while in other cases the method may include additional steps. The steps and modifications to the steps of the method described above, in some cases, may be performed in any order and in any combination.

Therefore, it is to be understood that the present disclosure is not to be limited to the specific embodiments disclosed and that modifications and other embodiments are intended to be included within the scope of the appended claims. Although specific terms are employed herein, they are used in a generic and descriptive sense only and not for purposes of limitation.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A communication platform for secure quandle-based encryption in a shared network infrastructure, the communication platform comprising:
a processor; and
a non-transitory storage device containing instructions that, when executed by the processor, cause the processor to:
receive, from a first entity, first primary information (fp) and first supplementary information (fs) for transmission to a second entity;
encrypt, using a quandle-based encryption framework, the first primary information (fp) using a public encryption key (e); and
transmit the encrypted first primary information (efp) and first supplementary information (fs) to the second entity,
wherein the communication platform uses network infrastructure shared with one or more other communication platforms.

2. The communication platform of Claim 1, wherein the first entity and the second entity are associated with the communication platform.

3. The communication platform of Claim 1 or 2, wherein the public encryption key (e) is associated with the communication platform.

4. The communication platform of Claim 1, 2, or 3, wherein the instructions, when executed by the processor, further cause the processor to:
generate the public encryption key (e).

5. The communication platform of Claim 1, 2, or 3, wherein the instructions, when executed by the processor, further cause the processor to:
receive the public encryption key (e) from an external source.

6. The communication platform of any of Claims 1-5, wherein the instructions, when executed by the processor, further cause the processor to:
generate the encrypted first primary information (efp) based on the first primary information (fp), an encoding variable (y), and the public encryption key (e), wherein *efp = fp* ▷ y, wherein ▷ is a binary operation that satisfy axioms of a quandle.

7. The communication platform of Claim 6, wherein 0 ≤ *fp* ≤ *n* - 1, wherein *fp* is a composite number of the form, *n* = *p* · *q*, and wherein *p* and *q* are prime numbers.

8. The communication platform of Claim 7, wherein $fp ▷ y = y {\left(\frac{fp}{y}\right)}^{e}$, wherein 1 < *e* < *ϕ*(*n*), wherein *ϕ*(*n*) is Euler's totient function, and wherein *ϕ*(*n*) = *ϕ*(*p* · *q*) *=* (*p -* 1) · (*q* - 1).

9. The communication platform of any of Claims 1-8, wherein the shared network infrastructure is a telecommunication network, wherein the communication platform is a telecommunication network provider, and wherein the first entity and the second entity are communication devices.

10. The communication platform of Claim 9, wherein the first primary information (fp) comprises at least one of communication data, entity location information, or private entity identification information, and wherein the first supplementary information (fs) comprises at least one of public entity identification information, communication duration, or metadata associated with the communication data.

11. The communication platform of any of Claims 1-10, wherein the shared network infrastructure is a datacenter environment, wherein the communication platform is a datacenter provider, and wherein the first entity and the second entity are virtual machines (VMs).

12. The communication platform of Claim 11, wherein the first primary information (fp) comprises at least one of source code files, contents of a VM's memory snapshot, private identification information, or database records, and wherein the first supplementary information (fs) comprises at least one of a VM metadata, database schema, file metadata, or access control information.

13. The communication platform of any of Claims 1-12, wherein the instructions, when executed by the processor, further cause the processor to:
establish a first initial communication link between the first entity and the second entity, and wherein transmitting the encrypted first primary information (efp) to the second entity comprises using the first initial communication link.

14. The communication platform of Claim 13, wherein the public encryption key (e) is a short key having a length that is less than or equal to 1024 bits, wherein the instructions, when executed by the processor, further cause the processor to:
transition from the first initial communication link to a first sustained communication link between the first entity and the second entity upon successful transmission of the encrypted first primary information (efp) and first supplementary information (fs) to the second entity, wherein transitioning further comprises transitioning the public encryption key (e) from the short key to a long key having a length that is greater than or equal to 2048 bits.

15. A method for secure quandle-based encryption in a shared network infrastructure, the method comprising:
receiving, at a communication platform, first primary information (fp) and first supplementary information (fs) from a first entity for transmission to a second entity;
encrypting, by the communication platform, using a quandle-based encryption framework, the first primary information (fp) using a public encryption key (e); and
transmitting, by the communication platform, the encrypted first primary information (efp) and first supplementary information (fs) to the second entity,
wherein the communication platform uses network infrastructure shared with one or more other communication platforms.
